(19) Europäisches Patentamt
European Patent Office
Office européen des brevets

(11) EP 1 871 931 B1

(12) **EUROPEAN PATENT SPECIFICATION**

(45) Date of publication and mention of the grant of the patent:
**27.04.2011 Bulletin 2011/17**

(21) Application number: **06738467.7**

(22) Date of filing: **15.03.2006**

(51) Int Cl.:
***D01F 6/30*** *(2006.01)* ***C08F 297/08*** *(2006.01)*
***C08F 295/00*** *(2006.01)* ***C08F 4/646*** *(2006.01)*

(86) International application number:
**PCT/US2006/009405**

(87) International publication number:
**WO 2006/101927 (28.09.2006 Gazette 2006/39)**

(54) **FIBERS MADE FROM COPOLYMERS OF PROPYLENE/ALPHA-OLEFINS**

AUS COPOLYMEREN VON PROPYLEN-/ALPHA-OLEFINEN HERGESTELLTE FASERN

FIBRES DE COPOLYMERES DE PROPYLENE/ALPHA-OLEFINES

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2005 PCT/US2005/008917**
**16.09.2005 US 717863 P**

(43) Date of publication of application:
**02.01.2008 Bulletin 2008/01**

(73) Proprietor: **Dow Global Technologies LLC**
**Midland, MI 48647 (US)**

(72) Inventors:
- **POON, Benjamin, C.**
  **Pearland, Texas 77581 (US)**
- **CHEUNG, Yunwa, Wilson**
  **Lake Jackson, Texas 77566 (US)**
- **LAI, Shih-Yaw**
  **Pearland, Texas 77584 (US)**
- **SEN, Ashish**
  **Lake Jackson, Texas 77566 (US)**
- **CHEN, Hongyu**
  **Lake Jackson, Texas 77566 (US)**
- **CHIU, Yeun-Yuen, D.**
  **Pearland, Texas 77584 (US)**
- **PATEL, Rajen, M.**
  **Lake Jackson, Texas 77566 (US)**
- **CHANG, Andy, C.**
  **Houston, Texas 77098 (US)**
- **DOUFAS, Antonios, K.**
  **Pittsburgh, PA 15206 (US)**
- **PENG, Hong**
  **Lake Jack,**
  **Texas 77566 (US)**

(74) Representative: **Hatzmann, Martin et al**
**Vereenigde**
**Johan de Wittlaan 7**
**2517 JR Den Haag (NL)**

(56) References cited:
**EP-A- 0 600 461** **EP-A- 0 875 609**
**EP-A1- 1 002 814** **EP-A1- 1 026 184**
**WO-A-02/28965** **WO-A-03/040442**
**WO-A-2005/090425** **WO-A-2005/090426**
**WO-A-2005/090427** **WO-A-2005/090655**
**JP-A- 9 208 761** **US-A- 5 668 235**
**US-A- 5 741 858** **US-A- 5 763 032**
**US-A1- 2003 088 037** **US-B1- 6 323 284**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

This invention relates to fibers made from propylene/α-olefin copolymers and methods of making the fibers, and products made from the fibers.

BACKGROUND OF THE INVENTION

Fibers are typically classified according to their diameter. Monofilament fibers are generally defined as having an individual fiber diameter greater than about 15 denier, usually greater than about 30 denier per filament. Fine denier fibers generally refer to fibers having a diameter less than about 15 denier per filament. Micro denier fibers are generally defined as fibers having less than 100 microns in diameter. Fibers can also be classified by the process by which they are made, such as monofilament, continuous wound fine filament, staple or short cut fiber, spun bond, and melt blown fibers.

Fibers with excellent elasticity are needed to manufacture a variety of fabrics which are used, in turn, to manufacture a myriad of durable articles, such as sport apparel and furniture upholstery. Elasticity is a performance attribute, and it is one measure of the ability of a fabric to conform to the body of a wearer or to the frame of an item. Preferably, the fabric will maintain its conforming fit during repeated use, extensions and retractions at body and other elevated temperatures (such as those experienced during the washing and drying of the fabric).

Fibers are typically characterized as elastic if they have a high percent elastic recovery (that is, a low percent permanent set) after application of a biasing force. Ideally, elastic materials are characterized by a combination of three important properties: (i) a low percent permanent set, (ii) a low stress or load at strain, and (iii) a low percent stress or load relaxation. In other words, elastic materials are characterized as having the following properties (i) a low stress or load requirement to stretch the material, (ii) no or low relaxing of the stress or unloading once the material is stretched, and (iii) complete or high recovery to original dimensions after the stretching, biasing or straining is discontinued.

Spandex is a segmented polyurethane elastic material known to exhibit nearly ideal elastic properties. However, spandex is cost prohibitive for many applications. Also, spandex exhibits poor environmental resistance to ozone, chlorine and high temperature, especially in the presence of moisture. Such properties, particularly the lack of resistance to chlorine, causes spandex to pose distinct disadvantages in apparel applications, such as swimwear and in white garments that are desirably laundered in the presence of chlorine bleach.

A variety of fibers and fabrics have been made from thermoplastics, such as polypropylene, highly branched low density polyethylene (LDPE) made typically in a high pressure polymerization process, linear heterogeneously branched polyethylene (e.g., linear low density polyethylene made using Ziegler catalysis), blends of polypropylene and linear heterogeneously branched polyethylene, blends of linear heterogeneously branched polyethylene, and ethylene/vinyl alcohol copolymers.

In spite of the advances made in the art, there is a continuing need for polyolefin-based elastic fibers which are soft and yielding to body movement. Preferably, such fibers would have relatively high elastic recovery and could be made at a relatively high throughput. Moreover, it would be desirable to form fibers which do not require cumbersome processing steps but still provide soft, comfortable fabrics which are not tacky.

SUMMARY OF THE INVENTION

The aforementioned needs are met by various aspects of the invention. In one aspect, the invention relates to a fiber obtainable from or comprising a propylene/α-olefin multiblock interpolymer comprised of at least 50 mole percent, drawn to the whole polymer, of propylene, wherein the propylene/α-olefin multiblock interpolymer is characterized by one or more of the following properties:

(a) having a Mw/Mn from 1.7 to 3.5, at least one melting point, Tm, in degrees Celsius, and a density, d, in grams/cubic centimeter, wherein the numerical values of Tm and d correspond to the relationship:

$$T_m > -2002.9 + 4538.5(d) - 2422.2(d)^2;$$

or

(b) having a Mw/Mn from 1.7 to 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g ,}$$

wherein the CRYSTAF peak is determined using at least 5 percent of the cumulative polymer, and if less than 5 percent of the polymer has an identifiable CRYSTAF peak, then the CRYSTAF temperature is 30°C; or

(c) having an elastic recovery, Re, in percent at 300 percent strain and 1 cycle measured with a compression-molded film of the interpolymer, and has a density, d, in grams/cubic centimeter, wherein the numerical values of Re and d satisfy the following relationship when the interpolymer is substantially free of a cross-linked phase:

$$Re > 1481 - 1629(d);$$

or

(d) having a comonomer content in the TREF fraction which elutes between 40°C and 130°C greater than or equal to the quantity (-0.2013) T + 21.07, where T is the numerical value of the peak ATREF elution temperature measured in °C.

In a preferred embodiment said propylene /α-olefin multiblock interpolymer has a storage modulus at 25°C, G' (25°C), and a storage modulus at 100°C, G'(100°C), wherein the ratio of G'(25°C) to G'(100°C) is from 1:1 to 10:1.

In a further aspect, the invention relates to a fiber obtainable from or comprising a propylene/α-olefin multi-block interpolymer comprised of at least 50 mole percent, of the whole polymer, of propylene, wherein the propylene/α-olefin multi-block interpolymer is characterized by having an average block index of from 0.1 up to 0.3 and a molecular weight distribution, $M_w/M_n$, greater than 1.3.

In another aspect, the invention relates to a fiber obtainable from or comprising at least one multiblock interpolymer of propylene and $C_2$ or $C_4$-$C_{20}$ α-olefin, said interpolymer being comprised of at least 50 mole percent, drawn to the total polymer, of propylene, wherein the multiblock interpolymer has a density from 0.860 g/cc to 0.895 g/cc and a compression set at 70°C of less than 70%. In some embodiments, the compression set at 70 °C is less than 60%, less than 50%, less than 40%, or less than 30%.

In some embodiments, the interpolymer satisfies the following relationship:

$$Re > 1491 - 1629(d);$$

or

$$Re > 1501 - 1629(d);$$

or

$$Re > 1511 - 1629(d).$$

In other emboodiments, the interpolymer has a melt index from 0.1 to 2000 g/10 minutes, from 1 to 1500 g/10 minutes, from 2 to 1000 g/10 minutes, from 5 to 500 g/10 minutes measured according to ASTM D-1238, Condition 190°C/2.16 kg. In some embodiments, the propylene/α-olefin interpolymer has a $M_w/M_n$ from 1.7 to 3.5 and is a random block copolymer comprising at least a hard block and at least a soft block. Preferably, the propylene/α-olefin interpolymer has a density in the range of 0.86 to 0.96 g/cc or 0.86 to 0.92 g/cc. In other embodiments, the propylene/α-olefin interpolymer is blended with another polymer.

The "α-olefin" in "propylene/α-olefin interpolymer" or "propylene/a-olefin/diene interpolymer" herein refers to $C_2$ or higher α-olefins (such as $C_3$ or above olefins). In some embodiments, the α-olefin is styrene, propylene, 1-butene, 1-hexene, 1-octene, 4-methyl-1-pentene, 1-decene, or a combination thereof and the diene is norbornene, 1,5-hexadiene, or a combination.

The fiber is elastic or inelastic. Sometimes, the fiber is cross-linked. The cross-linking can be effected by photon irradiation, electron beam irradiation, or a cross-linking agent. In some embodiments, the percent of cross-linked polymer is at least 20 percent, such as from 20 percent to 80 or from 35 percent to 50 percent, as measured by the weight percent of gels formed. Sometimes, the fiber is a bicomponent fiber. The bicomponent fiber has a sheath-core structure; a sea-island structure; a side-by-side structure; a matrix-fibril structure; or a segmented pie structure. The fiber can be a staple fiber or a binder fiber. In some embodiments, the fiber has coefficient of friction of less than 1.2, wherein the interpolymer is not mixed with any filler.

In some embodiments, the fiber has a diameter in the range of 0.1 denier to 1000 denier and the interpolymer has a melt index from 0.5 to 2000 and a density from 0.865 g/cc to 0.955 g/cc. In other embodiments, the fiber has a diameter in the range of 0.1 denier to 1000 denier and the interpolymer has a melt index from 1 to 2000 and a density from 0.865 g/cc to 0.955 g/cc. In still other embodiments, the fiber has a diameter in the range of 0.1 denier to 1000 denier and the interpolymer has a melt index from 3 to 1000 and a density from 0.865 g/cc to 0.955 g/cc.

In yet another aspect, the invention relates to a fabric comprising the fibers made in accordance with various embodiments of the invention. The fabrics can be spunbond; melt blown; gel spun; solution spun; etc. The fabrics can be elastic or inelastic, woven or non-woven. In some embodiments, the fabrics have an MD percent recovery of at least 50 percent at 100 percent strain.

In still another aspect, the invention relates to a carded web or yarn comprising the fibers made in accordance with various embodiments of the invention. The yarn can be covered or not covered. When covered, it may be covered by cotton yarns or nylon yarns.

In yet still another aspect, the invention relates to a method of making the fibers. The method comprises (a) melting a propylene/$\alpha$-olefin interpolymer (as described herein); and extruding the propylene/$\alpha$-olefin interpolymer into a fiber. The fiber can be formed by melting spinning; spun bonding; melt blowing, etc. In some embodiments, the fabric as formed is substantially free of roping. Preferably, the fiber is drawn below the peaking melting temperature of the interpolymer.

Additional aspects of the invention and characteristics and properties of various embodiments of the invention become apparent with the following description.

## DETAILED DESCRIPTION OF THE INVENTION

### General Definitions

"Fiber" means a material in which the length to diameter ratio is greater than about 10. Fiber is typically classified according to its diameter. Filament fiber is generally defined as having an individual fiber diameter greater than 15 denier, usually greater than 30 denier per filament. Fine denier fiber generally refers to a fiber having a diameter less than 15 denier per filament. Micro denier fiber is generally defined as fiber having a diameter less than 100 microns denier per filament.

"Filament fiber" or "monofilament fiber" means a continuous strand of material of indefinite (i.e., not predetermined) length, as opposed to a "staple fiber" which is a discontinuous strand of material of definite length (i.e., a strand which has been cut or otherwise divided into segments of a predetermined length).

"Elastic" means that a fiber will recover at least 50 percent of its stretched length after the first pull and after the fourth to 100% strain (doubled the length). Elasticity can also be described by the "permanent set" of the fiber. Permanent set is the converse of elasticity. A fiber is stretched to a certain point and subsequently released to the original position before stretch, and then stretched again. The point at which the fiber begins to pull a load is designated as the percent permanent set. "Elastic materials" are also referred to in the art as "elastomers" and "elastomeric". Elastic material (sometimes referred to as an elastic article) includes the copolymer itself as well as, but not limited to, the copolymer in the form of a fiber, film, strip, tape, ribbon, sheet, coating, molding and the like. The preferred elastic material is fiber. The elastic material can be either cured or uncured, irradiated or un-irradiated, and/or crosslinked or uncrosslinked.

"Nonelastic material" means a material, e.g., a fiber, that is not elastic as defined above.

"Substantially crosslinked" and similar terms mean that the copolymer, shaped or in the form of an article, has xylene exhactables of less than or equal to 70 weight percent (i.e., greater than or equal to 30 weight percent gel content), preferably less than or equal to 40 weight percent (i.e., greater than or equal to 60 weight percent gel content). Xylene extractables (and gel content) are determined in accordance with ASTM D-2765.

"Homofil fiber" means a fiber that has a single polymer region or domain, and that does not have any other distinct polymer regions (as do bicomponent fibers).

"Bicomponent fiber" means a fiber that has two or more distinct polymer regions or domains. Bicomponent fibers are also know as conjugated or multicomponent fibers. The polymers are usually different from each other although two or more components may comprise the same polymer. The polymers are arranged in substantially distinct zones

across the cross-section of the bicomponent fiber, and usually extend continuously along the length of the bicomponent fiber. The configuration of a bicomponent fiber can be, for example, a sheath/core arrangement (in which one polymer is surrounded by another), a side by side arrangement, a pie arrangement or an "islands-in-the sea" arrangement. Bicomponent fibers are further described in USP 6,225,243, 6,140,442, 5,382,400, 5,336,552 and 5,108,820.

"Meltblown fibers" are fibers formed by extruding a molten thermoplastic polymer composition through a plurality of fine, usually circular, die capillaries as molten threads or filaments into converging high velocity gas streams (e.g. air) which function to attenuate the threads or filaments to reduced diameters. The filaments or threads are carried by the high velocity gas streams and deposited on a collecting surface to form a web of randomly dispersed fibers with average diameters generally smaller than 10 μm (microns).

"Meltspun fibers" are fibers formed by melting at least one polymer and then drawing the fiber in the melt to a diameter (or other cross-section shape) less than the diameter (or other cross-section shape) of the die.

"Spunbond fibers" are fibers formed by extruding a molten thermoplastic polymer composition as filaments through a plurality of fine, usually circular, die capillaries of a spinneret. The diameter of the extruded filaments is rapidly reduced, and then the filaments are deposited onto a collecting surface to form a web of randomly dispersed fibers with average diameters generally between about 7 and about 30 μm (microns).

"Nonwoven" means a web or fabric having a structure of individual fibers or threads which are randomly interlaid, but not in an identifiable manner as is the case of a knitted fabric. The elastic fiber in accordance with embodiments of the invention can be employed to prepare nonwoven structures as well as composite structures of elastic nonwoven fabric in combination with nonelastic materials.

"Yarn" means a continuous length of twisted or otherwise entangled filaments which can be used in the manufacture of woven or knitted fabrics and other articles. Yarn can be covered or uncovered. Covered yarn is yarn at least partially wrapped within an outer covering of another fiber or material, typically a natural fiber such as cotton or wool.

"Polymer" means a polymeric compound prepared by polymerizing monomers, whether of the same or a different type. The generic term "polymer" embraces the terms "homopolymer," "copolymer," "terpolymer" as well as "interpolymer."

"Interpolymer" means a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

The term "propylenela-olefin interpolymer" refers to polymers with propylene being the majority mole fraction of the whole polymer; that, is propylene comprises at least 50 mole percent of the whole polymer, more preferably at least 60 mole percent, at least 70 mole percent, or at least 80 mole percent, with the reminder of the whole polymer comprising at least another comonomer. For propylene/octene copolymers, the preferred composition includes a propylene content greater than 80 mole percent with a octene content of equal to or less than 20 mole percent. In some embodiments, the propylene/α-olefin interpolymers do not include those produced in low yields or in a minor amount or as a by-product of a chemical process. While the propylene/α-olefin interpolymers can be blended with one or more polymers, the as-produced propylene/α-olefin interpolymers are substantially pure and constitute the major component of a polymerization process.

The propylene/α-olefin interpolymers comprise propylene and one or more copolymerizable α-olefin comonomers in polymerized form, characterized by multiple (i.e., two or more) blocks or segments of two or more polymerized monomer units differing in chemical or physical properties (block interpolymer), preferably a multi-block copolymer. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a linear fashion, not in a branched or a star fashion. "Hard" segments refer to blocks of polymerized units in which propylene is present in an amount greater than 95 weight percent, and preferably greater than 98 weight percent. In other words, the comonomer content in the hard segments is less than 5 weight percent, and preferably less than 2 weight percent. In some embodiments, the hard segments comprises all or substantially all propylene. "Soft" segments, on the other hand, refer to blocks of polymerized units in which the comonomer content is greater than 5 weight percent, preferably greater than 8 weight percent, greater than 10 weight percent, or greater than 15 weight percent. In some embodiments, the comonomer content in the soft segments can be greater than 20 weight percent, greater than 25 eight percent, greater than 30 weight percent, greater than 35 weight percent, greater than 40 weight percent, greater than 45 weight percent, greater than 50 weight percent, or greater than 60 weight percent.

In some embodiments, A blocks and B blocks are randomly distributed along the polymer chain. In other words,

the block copolymers do not have a structure like:

AAA-AA-BBB-BB

In other embodiments, the block copolymers do not have a third type of block. In still other embodiments, each of block A and block B has monomers or comonomers randomly distributed within the block. In other words, neither block A nor block B comprises two or more segments (or sub-blocks) of distinct composition, such as a tip segment, which has a different composition than the rest of the block.

The term "crystalline" if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, $R^L$ and an upper limit, $R^U$, is disclosed, any number falling within the range is specifically disclosed. In particular, the following numbers within the range are specifically disclosed: $R=R^L+k*(R^U-R^L)$, wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Embodiments of the invention provide fibers made from new propylene/α-olefin interpolymers with unique properties and fabrics and other products made from such fibers. The fibers may have good abrasion resistance; low coefficient of friction; high upper service temperature; high recovery/retractive force; low stress relaxation (high and low temperatures); soft stretch; high elongation at break; inert: chemical resistance; and/or UV resistance. The fibers can be melt spun at a relatively high spin rate and lower temperature. In addition, the fibers are less sticky, resulting in better unwind performance and better shelf life, and are substantially free of roping (i.e., fiber bundling). Because the fibers can be spun at a higher spin rate, the fibers' production throughput is high. Such fibers also have broad formation windows and broad processing windows.

## Propylene/α-Olefin Interpolymers

The propylene/α-olefin interpolymers used in embodiments of the invention (also referred to as "inventive interpolymer" or "inventive polymer") comprise propylene and one or more copolymerizable α-olefin comonomers in polymerized form, characterized by multiple blocks or segments of two or more polymerized monomer units differing in chemical or physical properties (block interpolymer), preferably a multi-block copolymer. The propylene/α-olefin interpolymers are characterized by one or more of the aspects described as follows.

In one aspect, the propylene/α-olefin interpolymers have a $M_w/M_n$ from 1.7 to 3.5 and at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2,$$

and preferably

$$T_m \geq -6288.1 + 13141(d) - 6720.3(d)^2,$$

and more preferably

$$T_m \geq 858.91 - 1825.3(d) + 1112.8(d)^2;$$

Unlike the traditional random copolymers of propylene/α-olefins whose melting points decrease with decreasing densities, the inventive interpolymers (represented by diamonds) exhibit melting points substantially independent of the density, particularly when density is between 0.87 g/cc to 0.95 g/cc. For example, the melting point of such polymers are in the range of 110°C to 130 °C when density ranges from 0.875 g/cc to 0.945 g/cc. In some embodiments, the melting point of such polymers are in the range of 115 °C to 125 °C when density ranges from 0.875 g/cc to 0.945 g/cc.

In another aspect, the propylene/α-olefin interpolymers comprise in polymerized form of propylene and one or more α-olefins and is characterized by a ΔT, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, ΔH, and ΔT and ΔH satisfy the following relationships:

$$\Delta T > -0.1299(\Delta H) + 62.81,$$

and preferably

$$\Delta T \geq -0.1299(\Delta H) + 64.38,$$

and more preferably

$$\Delta T \geq -0.1299(\Delta H) + 65.95,$$

for ΔH up to 130 J/g.

Moreover, ΔT is equal to or greater than 48 °C for ΔH greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30°C, and ΔH is the numerical value of the heat of fusion in J/g. More preferably, the highest CRYSTAF peak comprises at least 10 percent of the cumulative polymer.

In yet another aspect, the propylene/α-olefin interpolymers have a molecular fraction which elutes between 40°C and 130°C when fractionated using Temperature Rising Elution Fractionation ("TREF"), characterized in that said fraction has a molar comonomer content higher, preferably at least 5 percent higher, more preferably at least 10, 15, 20 or 25 percent higher, than that of a comparable random propylene interpolymer fraction eluting between the same temperatures, wherein the comparable random propylene interpolymer comprises the same comonomer(s), and has a melt index, density, and molar comonomer content (based on the whole polymer) within 10 percent of that of the block interpolymer. Preferably, the Mw/Mn of the comparable interpolymer is also within 10 percent of that of the block interpolymer and/or the comparable interpolymer has a total comonomer content within 10 weight percent of that of the block interpolymer.

In still another aspect, the propylene/α-olefm interpolymers are characterized by an elastic recovery, Re, in percent at 300 percent strain and 1 cycle measured on a compression-molded film of a propylene/α-olefin interpolymer, and has a density, d, in grams/cubic centimeter, wherein the numerical values of Re and d satisfy the following relationship when propylene/α-olefin interpolymer is substantially free of a cross-linked phase:

$$Re > 1481 - 1629(d);$$

and preferably

$$Re \geq 1491-1629(d);$$

and more preferably

$$Re \geq 1501-1629(d);$$

and even more preferably

$$Re \geq 1511-1629(d);.$$

Compared to traditional random copolymers, the inventive interpolymers have substantially higher elastic recoveries for the same density.

In some embodiments, the propylene/α-olefin interpolymers have a tensile strength above 10 MPa, preferably a tensile strength ≥ 11 MPa, more preferably a tensile strength ≥ 13MPa and/or an elongation at break of at least 600 percent, more preferably at least 700 percent, highly preferably at least 800 percent, and most highly preferably at least 900 percent at a crosshead separation rate of 11 cm/minute.

In other embodiments, the propylene/α-olefin interpolymers have (1) a storage modulus ratio, G'(25°C)/G'(100°C), of from 1 to 50, preferably from 1 to 20, more preferably from 1 to 10; and/or (2) a 70°C compression set of less than 80 percent, preferably less than 70 percent, especially less than 60 percent, less than 50 percent, or less than 40 percent, down to a compression set of 0 percent.

In some embodiments, the propylene/α-olefin interpolymers have a heat of fusion of less than 85 J/g and/or a pellet blocking strength of equal to or less than 100 pounds/foot$^2$ (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the propylene/α-olefin interpolymers comprise in polymerized form at least 50 mole percent propylene and have a 70°C compression set of less than 80 percent, preferably less than 70 percent or less than 60 percent, most preferably less than 40 to 50 percent and down to close zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multiblock copolymers are those containing 4 or more blocks or segments including terminal blocks. More preferably, the copolymers include at least 5, 10 or 20 blocks or segments including terminal blocks.

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions each having an eluted temperature range of 10°C or less. That is, each eluted fraction has a collection temperature window of 10°C or less. Using this technique, said block interpolymers have at least one such fraction having a higher molar comonomer content than a corresponding fraction of the comparable interpolymer.

Preferably, for interpolymers of propylene and 1-octene, the block interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

In addition to the above aspects and properties described herein, the inventive polymers can be characterized by one or more additional characteristics. In one aspect, the inventive polymer is an olefin interpolymer, preferably comprising propylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that said fraction has a molar comonomer content higher, preferably at least 5 percent higher, more preferably at least 10, 15, 20 or 25 percent higher, than that of a comparable random propylene interpolymer fraction eluting between the same temperatures, wherein said comparable random propylene interpolymer has the same comonomer(s), and a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable

interpolymer has a total comonomer content within 10 weight percent of that of the blocked interpolymer.

Preferably, the above interpolymers are interpolymers of propylene and at least one alpha-olefin, especially those interpolymers having a whole polymer density from 0.855 to 0.935 g/cm$^3$, and more especially for polymers having more than about 1 mole percent comonomer, the blocked interpolymer has a comonomer content of the TREF fraction eluting between 40 and 130°C greater than or equal to the quantity (- 0.1356) T + 13.89, more preferably greater than or equal to the quantity (-0.1356) T+ 14.93, and most preferably greater than or equal to the quantity (-0.2013)T + 21.07, where T is the numerical value of the peak ATREF elution temperature of the TREF fraction being compared, measured in °C.

Comonomer content may be measured using any suitable technique, with techniques based on nuclear magnetic resonance (NMR) spectroscopy preferred. Moreover, for polymers or blends of polymers having relatively broad TREF curves, the polymer desirably is first fractionated using TREF into fractions each having an eluted temperature range of 10°C or less. That is, each eluted fraction has a collection temperature window of 10°C or less. Using this technique, said blocked interpolymers have at least one such fraction having a higher molar comonomer content than a corresponding fraction of the comparable interpolymer.

In another aspect, the inventive polymer is an olefin interpolymer, preferably comprising propylene and one or more copolymerizable comonomers in polymerized form, characterized by multiple blocks or segments of two or more polymerized monomer units differing in chemical or physical properties (blocked interpolymer), most preferably a multiblock copolymer, said block interpolymer having a peak (but not just a molecular fraction) which elutes between 40°C and 130°C (but without collecting and/or isolating individual fractions), characterized in that said peak, has a comonomer content estimated by infra-red spectroscopy when expanded using a full width/half maximum (FWHM) area calculation, has an average molar comonomer content higher, preferably at least 5 percent higher, more preferably at least 10 percent higher, than that of a comparable random propylene interpolymer peak at the same elution temperature and expanded using a full width/half maximum (FWHM) area calculation, wherein said comparable random propylene interpolymer comprises the same comonomer(s), preferably it is the same comonomer, and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [CH3/CH2] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve. A calibration curve for comonomer content is made using random propylene/alpha-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl : methylene area ratio [CH3/CH2] of the TREF peak.

Comonomer content may be measured using any suitable technique, with techniques based on nuclear magnetic resonance (NMR) spectroscopy preferred. Using this technique, said blocked interpolymers has higher molar comonomer content than a corresponding comparable interpolymer.

Preferably, for the above interpolymers of propylene and at least one alpha-olefin especially those interpolymers having a whole polymer density from 0.855 to 0.935 g/cm$^3$, and more especially for polymers having more than 1 mole percent comonomer, the blocked interpolymer has a comonomer content of the TREF fraction eluting between 40 and 130°C greater than or equal to the quantity (- 0.2013) T+ 20.07, more preferably greater than or equal to the quantity (-0.2013) T+ 21.07, where T is the numerical value of the peak elution temperature of the TREF fraction being compared, measured in °C.

In still another aspect, the inventive polymer is an olefin interpolymer, preferably comprising propylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction having a comonomer content of at least 6 mole percent, has a melting point greater than 100°C. For those fractions having a comonomer content from 3 mole percent to 6 mole percent, every fraction has a DSC melting point of 110°C or higher. More preferably, said polymer fractions, having at least 1 mol percent comonomer, has a DSC melting point that corresponds to the equation:

$$Tm \geq (-5.5926)(\text{mol percent comonomer in the fraction}) + 135.90.$$

In yet another aspect, the inventive polymer is an olefin interpolymer, preferably comprising propylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction that has an ATREF elution temperature greater than or equal to about 76°C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58,$$

Block interpolymers having a molecular fraction which elutes between 40°C and 130°C, when fractionated using TREF increments, characterized in that every fraction that has an ATREF elution temperature between 40°C and less than about 76°C, has a melt enthalpy (heat of fusion) as measured by DSC, corresponding to the equation:

$$\text{Heat of fusion (J/gm)} \leq (1.1312)(\text{ATREF elution temperature in Celsius}) + 22.97.$$

**ATREF Peak Comonomer Composition Measurement by Infra-Red Detector**

The comonomer composition of the TREF peak can be measured using an IR4 infra-red detector available from Polymer Char, Valencia, Spain (http://www.polymerchar.com/).

The "composition mode" of the detector is equipped with a measurement sensor (CH2) and composition sensor (CH3) that are fixed narrow band infra-red filters in the region of 2800-3000 $cm^{-1}$. The measurement sensor detects the methylene (CH2) carbons on the polymer (which directly relates to the polymer concentration in solution) while the composition sensor detects the methyl (CH3) groups of the polymer. The mathematical ratio of the composition signal (CH3) divided by the measurement signal (CH2) is sensitive to the comonomer content of the measured polymer in solution and its response is calibrated with known propylene alpha-olefin copolymer standards.

The detector when used with an ATREF instrument provides both a concentration (CH2) and composition (CH3) signal response of the eluted polymer during the TREF process. A polymer specific calibration can be created by measuring the area ratio of the CH3 to CH2 for polymers with known comonomer content (preferably measured by NMR). The comonomer content of an ATREF peak of a polymer can be estimated by applying a the reference calibration of the ratio of the areas for the individual CH3 and CH2 response (i.e. area ratio CH3/CH2 versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [CH3/CH2] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infra-red method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of propylene-based polyolefin copolymers". Polymeric Materials Science and Engineering (1991), 65, 98-100.; and Deslauriers, P.J.; Rohlfing, D.C.; Shieh, E.T.; Quantifying short chain branching microstructures in propylene-1-olefin copolymers using size exclusion chromatography and Fourier transform infrared spectroscopy (SEC-FTIR), Polymer (2002), 43, 59-170.

In yet another aspect, the inventive propylene/α-olefin interpolymer is characterized by an average block index, ABI, which is from 0.1 up to 0.3 and a molecular weight distribution, $M_w/M_n$, greater than 1.3. The average block index, ABI, is the weight average of the block index for each of the polymer fractions obtained in preparative TREF from 20°C and 110°C, with an increment of 5°C :

$$ABI = \sum (w_i BI_i)$$

where $BI_i$ is the block index for the ith fraction of the inventive propylene/α-olefin interpolymer obtained in preparative TREF, and $w_i$ is the weight percentage of the ith fraction.

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_x$ is the preparative ATREF elution temperature for the ith fraction (preferably expressed in Kelvin), $P_x$ is the propylene mole fraction for the ith fraction, which can be measured by NMR or IR as described above. $P_{AB}$ is the propylene mole fraction of the whole propylene/α-olefin interpolymer (before firactionation), which also can be measured by NMR or IR. $T_A$ and $P_A$ are the ATREF elution temperature and the propylene mole fraction for pure "hard segments" (which refer to the crystalline segments of the interpolymer). As first order approximation, the $T_A$ and $P_A$ values are set to those for polypropylene homopolymer, if the actual values for the "hard segments" are not available.

$T_{AB}$ is the ATREF temperature for a random copolymer of the same composition and having a propylene mole fraction of $P_{AB}$. $T_{AB}$ can be calculated from the following equation:

$$\text{Ln } P_{AB} = \alpha/T_{AB} + \beta$$

where α and β are two constants which can be determined by calibration using a number of known random propylene copolymers. It should be noted that a and β may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random propylene copolymers satisfy the following relationship:

$$\text{Ln } P = -237.83/T_{ATREF} + 0.639$$

Txo is the ATREF temperature for a random copolymer of the same composition and having a propylene mole fraction of $P_X$. $T_{XO}$ can be calculated from $LnP_X = \alpha/T_{XO} + \beta$. Conversely, $P_{XO}$ is the propylene mole fraction for a random copolymer of the same composition and having an ATREF temperature of $T_X$, which can be calculated from Ln $P_{XO} = \alpha/T_X + \beta$.

Once the block index for each preparative TREF fraction is obtained, the weight average block index, ABI, for the whole polymer can be calculated.

Another characteristic of the inventive propylene/αolefin interpolymer is that the inventive propylene/α olefin interpolymer comprises at least one polymer fraction which can be obtained by preparative TREF, wherein the fraction has a block index greater than 0.1 and up to 1.0 and a molecular weight distribution, $M_w/M_n$, greater than 1.3. In some embodiments, the polymer fraction has a block index greater than 0.6 and up to 1.0, greater than 0.7 and up to 1.0, greater than 0.8 and up to 1.0, or greater than 0.9 and up to 1.0. In other embodiments, the polymer fraction has a block index greater than 0.1 and up to 1.0, greater than 0.2 and up to 1.0, greater than 0.3 and up to 1.0, or greater than 0.4 and up to 1.0. In still other embodiments, the polymer fraction has a block index greater than 0.1 and up to 0.5, greater than 0.2 and up to 0.5, greater than 0.3 and up to 0.5, or greater than 0.4 and up to 0.5. In yet other embodiments, the polymer fraction has a block index greater than 0.2 and up to 0.9, greater than 0.3 and up to 0.8, greater than 0.4 and up to 0.7, or greater than 0.5 and up to 0.6.

For copolymers of propylene and an α-olefin, the inventive polymers preferably possess (1) a PDI of at least 1.3, more preferably at least 1.5, at least 1.7, or at least 2.0, and most preferably at least 2.6, up to a maximum value of 5.0, more preferably up to a maximum of 3.5, and especially up to a maximum of 2.7; (2) a heat of fusion of 80 J/g or less; (3) a propylene content of at least 50 weight percent; (4) a glass transition temperature, $T_g$, of less than -25°C, more preferably less than -30°C, and/or (5) one and only one $T_m$.

Further, the inventive polymers can have, alone or in combination with any other properties disclosed herein, a storage modulus, G', such that log (G') is greater than or equal to 400 kPa, preferably greater than or equal to 1.0 MPa, at a temperature of 100°C. Moreover, the inventive polymers possess a relatively flat storage modulus as a function of temperature in the range from 0 to 100°C that is characteristic of block copolymers, and heretofore unknown for an olefin copolymer, especially a copolymer of propylene and one or more $C_2$ or $C_{4-8}$ aliphatic α-olefins. (By the term

"relatively flat" in this context is meant that log G' (in Pascals) decreases by less than one order of magnitude between 50 and 100°C, preferably between 0 and 100°C).

The inventive interpolymers may be further characterized by a thermomechanical analysis penetration depth of 1 mm at a temperature of at least 90°C as well as a flexural modulus of from 3 kpsi (20 MPa) to 13 kpsi (90 MPa). Alternatively, the inventive interpolymers can have a thermomechanical analysis penetration depth of 1 mm at a temperature of at least 104°C as well as a flexural modulus of at least 3 kpsi (20 MPa). They may be characterized as having an abrasion resistance (or volume loss) of less than 90 $mm^3$.

Additionally, the invention interpolymers can have a melt index, $I_2$, from 0.01 to 2000 g/10 minutes, preferably from 0.01 to 1000 g/10 minutes, more preferably from 0.01 1 to 500 g/10 minutes, and especially from 0.01 to 100 g/10 minutes. The polymers can have molecular weights, $M_w$, from 1,000 g/mole to 5,000,000 g/mole, preferably from 1000 g/mole to 1,000,000, more preferably from 10,000 g/mole to 500,000 g/mole, and especially from 10,000 g/mole to 300,000 g/mole. The density of the inventive polymers can be from 0.80 to 0.99 $g/cm^3$ and preferably for propylene containing polymers from 0.85 $g/cm^3$ to 0.97 $g/cm^3$.

The process of making the ethylene-based polymers has been disclosed in the following patent applications: U.S. Provisional Application No. 60/553,906, filed March 17, 2004; U.S. Provisional Application No. 60/662,937, filed March 17, 2005; U.S. Provisional Application No. 60/662,939, filed March 17, 2005; U.S. Provisional Application No. 60/5662938, filed March 17,2005; PCT Application No. PCT/US2005/008916, filed March 17,2005; PCT Application No. PCT/LTS2005/008915, filed March 17,2005; and PCT Application No. PCT/US2005/008917, filed March 17, 2005. The disclosed methods can be similarly used to make propylene-based polymers with or without modifications. For example, one such method comprises contacting propylene and optionally one or more addition polymerizable monomers other than propylene under addition polymerization conditions with a catalyst composition comprising:

the admixture or reaction product resulting from combining:

(A) a first olefin polymerization catalyst having a high comonomer incorporation index,
(B) a second olefin polymerization catalyst having a comonomer incorporation index less than 90 percent, preferably less than 50 percent, most preferably less than 5 percent of the comonomer incorporation index of catalyst (A), and
(C) a chain shuttling agent.

Representative catalysts and chain shuttling agent are as follows.

**Catayst (A1)** is [N-(2,6-di(1-methylethyl)phenyl)amido)(2-isopropylphenyl)(α-naphthalen-2-diyl(6-pyridin-2-diyl)methane)]hafnium dimethyl, prepared according to the teachings of WO 03/40195, 2003US0204017, USSN 10/429,024, filed May 2, 2003, and WO 04/24740.

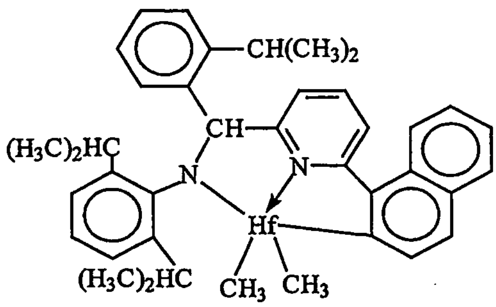

**Catalyst (A2)** is [N-(2,6-di(1-methylethyl)phenyl)amido)(2-methylphenyl)(1,2-phenylene-(6-pyridin-2-diyl) methane)]hafnium dimethyl, prepared according to the teachings of WO 03/40195, 2003US0204017, USSN 10/429,024, filed May 2,2003, and WO 04/24740.

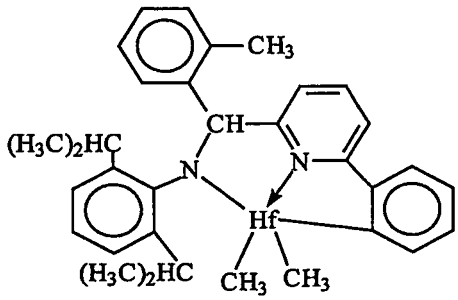

**Catalyst (A3)** is bis[N,N'''-(2,4,6-tri(methylphenyl)amido)ethylenediamine]hafnium dibenzyl.

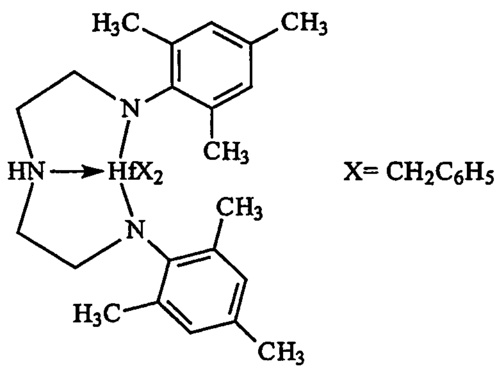

**Catalyst (A4)** is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103.

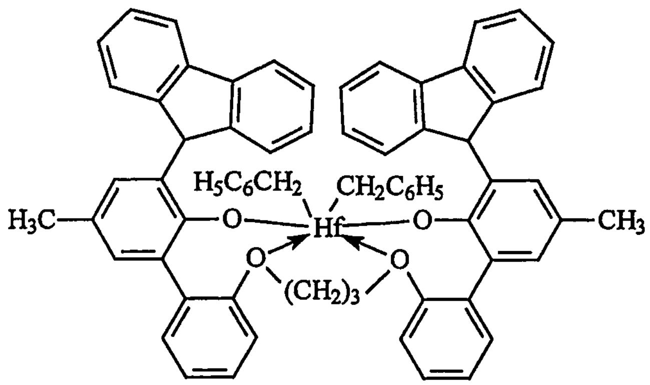

**Catalyst (B1)** is 1,2-bis-(3,5-di-t-butylphenylene)(1-(N-(1-methylethyl)immino)methyl)(2-oxoyl) zirconium dibenzyl

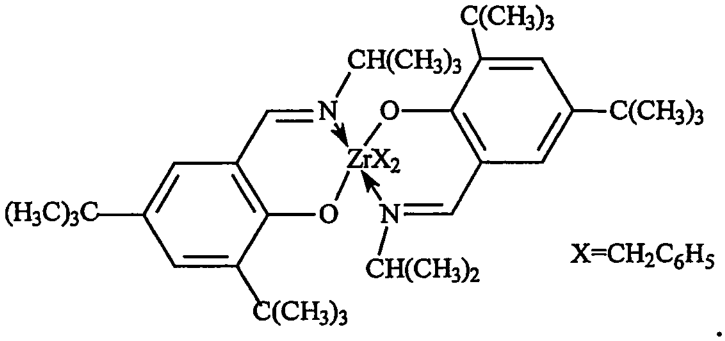

**Catalyst (B2)** is 1,2-bis-(3,5-di-t-butylphenylene)(1-(N-(2-methylcyclohexyl)-immino)methyl)(2-oxoyl) zirconium dibenzyl

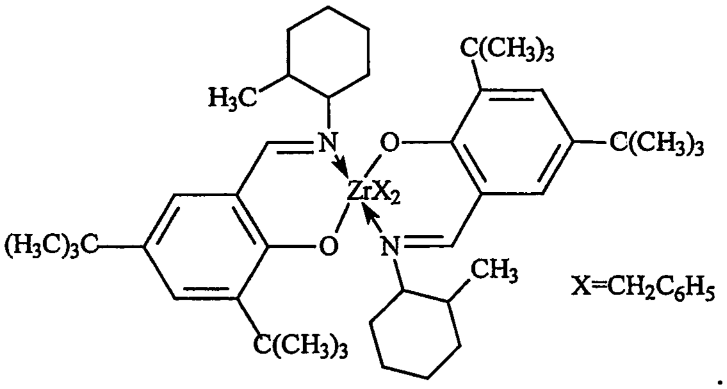

**Catalyst (C1)** is (t-butylamido)dimethyl(3-N-pyrrolyl-1,2,3,3a,7a-η-inden-1-yl)silanetitanium dimethyl prepared substantially according to the techniques of USP 6,268,444:

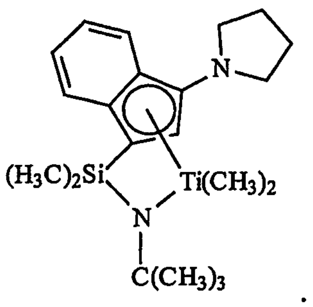

**Catalyst (C2)** is (t-butylamido)di(4-methylphenyl)(2-methyl-1,2,3,3a,7a-η-inden-1-yl)silanetitanium dimethyl prepared substantially according to the teachings of US-A-2003/004286:

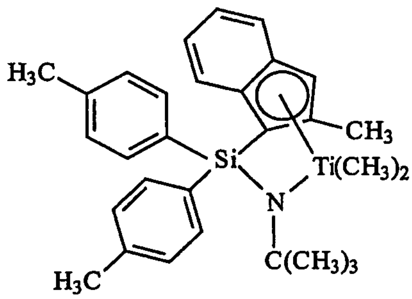

.

**Catalyst (C3)** is (t-butylamido)di(4-methylphenyl)(2-methyl-1,2,3,3a,8a-η-s-indacen-1-yl)silanetitanium dimethyl prepared substantially according to the teachings of US-A-2003/004286:

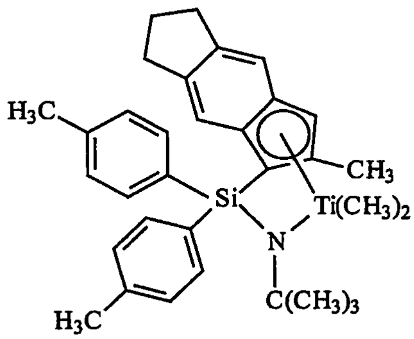

**Catalyst (D1)** is bis(dimethyldisiloxane)(indene-1-yl)zirconium dichloride available from Sigma-Aldrich:

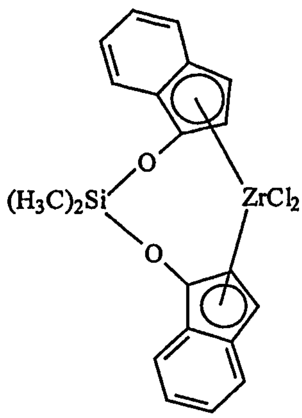

.

**Shuttling Agents** The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially propylene and a $C_2$ or $C_{4-20}$ olefin or cycloolefin, and most especially propylene and a $C_{4-20}$ α-olefin, using multiple catalysts that are incapable of interconversion. That is the catalysts are chemically distinct. Under continuous solution

polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multiblock copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer comprising the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using CRYSTAF and DSC as a function of heat of fusion, especially as compared to random copolymers comprising the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymers blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased, the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any β-hydride elimination is observed in the polymerization of propylene/α-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The propylene α-olefin interpolymers used in the embodiments of the invention are preferably interpolymers of propylene with at least one $C_2$ or $C_4$-$C_{20}$ α-olefin. Copolymers of propylene and a $C_2$ or $C_4$-$C_{20}$ α-olefin are especially preferred. The interpolymers may further comprise $C_4$-$C_{18}$ diolefin and/or alkenylbenzene. Suitable unsaturated comonomers useful for polymerizing with propylene include, for example, ethylenically unsaturated monomers, conjugated or nonconjugated dienes, polyenes, alkenylbenzenes, etc. Examples of such comonomers include $C_2$ or $C_4$-$C_{20}$ α -olefins such as propylene, isobutylene, 1-butene, 1-hexene, 1-pentene, 4-methyl-1-pentene, 1-heptene, 1-octene, 1-nonene, 1-decene, and the like. 1-Butene and 1-octene are especially preferred. Other suitable monomers include styrene, halo- or alkyl-substituted styrenes, vinylbenzocyclobutane, 1,4-hexadiene, 1,7-octadiene, and naphthenics (e.g., cyclopentene, cyclohexene and cyclooctene).

While propylene/α-olefin interpolymers are preferred polymers, other propylene/olefin polymers may also be used. Olefins as used herein refer to a family of unsaturated hydrocarbon-based compounds with at least one carbon-carbon double bond. Depending on the selection of catalysts, any olefin may be used in embodiments of the invention. Preferably, suitable olefins are $C_2$ or $C_4$-$C_{20}$ aliphatic and aromatic compounds containing vinylic unsaturation, as well as cyclic compounds, such as cyclobutene, cyclopentene, dicyclopentadiene, and norbornene, including but not limited to, norbornene substituted in the 5 and 6 position with C1-20 hydrocarbyl or cyclohydrocarbyl groups. Also included are mixtures of such olefins as well as mixtures of such olefins with C4-40 diolefin compounds.

Examples of olefin monomers include, but are not limited to propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, C4-40 dienes, including but not limited to 1,3-butadiene, 1,3-pentadiene, 1,4-hexadiene, 1,5-hexadiene, 1,7-octadiene, 1,9-decadiene, other C4-40 α-olefins, and the like. Although any hydrocarbon containing a vinyl group potentially may be used in embodiments of the invention, practical issues such as monomer availability, cost, and the ability to conveniently remove unreacted monomer from the resulting polymer may become more problematic as the molecular weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising propylene and styrene can be prepared by following the teachings herein. Optionally, copolymers comprising ethylene, styrene and a C4-20 alpha olefin, optionally comprising a C4-20 diene, having improved properties can be prepared.

Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbomene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbomene (ENB) and 1,4-hexadiene (HD).

One class of desirable polymers that can be made in accordance with embodiments of the invention are elastomeric interpolymers of propylene, a $C_2$ or $C_4$-$C_{20}$ α-olefin, especially ethylene, and optionally one or more diene monomers. Preferred α-olefins for use in this embodiment of the present invention are designated by the formula $CH_2$=CHR*, where R* is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene, and 1-octene. A particularly preferred α-olefin is propylene. The propylene based polymers are generally referred to in the art as EP or EPDM polymers. Suitable dienes for use in preparing such polymers, especially multiblock EPDM type polymers include conjugated or non-conjugated, straight or branched chain-, cyclic- or polycyclic- dienes containing from 4 to 20 carbons. Preferred dienes include 1,4-pentadiene, 1,4-hexadiene, 5-ethylidene-2-norbomene, dicyclopentadiene, cyclohexadiene, and 5-butylidene-2-norbornene. A particularly preferred diene is 5-ethylidene-2-norbomene.

Because the diene containing polymers contain alternating segments or blocks containing greater or lesser quantities of the diene (including none) and α-olefin (including none), the total quantity of diene and α-olefin may be reduced without loss of subsequent polymer properties. That is, because the diene and α-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts incorporating differing quantities of comonomer have a weight ratio of blocks formed thereby from 95:5 to 5:95. The elastomeric polymers desirably have a propylene content of from 20 to 90 percent, a diene content of from 0.1 to 10 percent, and an α-olefin content of from 10 to 80 percent, based on the total weight of the polymer. Further preferably, the multi-block elastomeric polymers have a propylene content of from 60 to 90 percent, a diene content of from 0.1 to 10 percent, and an α-olefin content of from 10 to 40 percent, based on the total weight of the polymer. Preferred polymers are high molecular weight polymers, having a weight average molecular weight (Mw) from 10,000 to about 2,500,000, preferably from 20,000 to 500,000, more preferably from 20,000 to 350,000, and a polydispersity less than 3.5, more preferably less than 3.0, and a Mooney

viscosity (ML (1+4) 125°C.) from 1 to 250. More preferably, such polymers have a propylene content from 65 to 75 percent, a diene content from 0 to 6 percent, and an α-olefin content from 20 to 35 percent.

The propylene/α-olefin interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to a propylene/ α-olefin interpolymer, or it may be copolymerized with propylene and an optional additional comonomer to form an interpolymer of propylene, the functional comonomer and optionally other comonomer(s). Means for grafting functional groups onto polyethylene are described for example in U.S. Patents Nos. 4,762,890, 4,927,888, and 4,950,541.
One particularly useful functional group is maleic anhydride.

The amount of the functional group present in the functional interpolymer can vary. The functional group can typically be present in a copolymer-type functionalized interpolymer in an amount of at least 1.0 weight percent, preferably at least 5 weight percent, and more preferably at least 7 weight percent The functional group will typically be present in a copolymer-type functionalized interpolymer in an amount less than 40 weight percent, preferably less than 30 weight percent, and more preferably less than 25 weight percent.

Fibers and Articles of Manufacture

The preferred use of the inventive fibers, is in the formation of fabric, especially non-woven fabrics. Fabrics formed from the fibers have been found to have excellent elastic properties making them suitable for many garment applications. They also have good drapeability.

Some of the desirable properties of fibers and fabric may be expressed in terms of tensile modulus and permanent set. For a spunbonded fabric according to the invention, the preferred properties which are obtained are as follows:

Tensile modulus (g) (ASTM-1682) (100% extension, 6 cycles, machine direction (MD)): preferably less than 900, more preferably less than 800, most preferably from 100 to 400; and/or

Tensile modulus (g) (50% extension, 6 cycles, MD): preferably less than 700, more preferably less than 600, most preferably from 100 to 300; and/or

Tensile modulus (g) (100% extension, 6 cycles, transverse direction (TD)): preferably less than 600, more preferably less than 500, most preferably from 50 to 300; and/or

Tensile modulus (g) (50% extension, 6 cycles, TD): preferably less than 370, more preferably from 40 to 200; and/or

Permanent set (%) (obtained through use of a modification of ASTM D-1682 wherein the stretching is cycled rather than continued through fabric failure) (50% extension, 6 cycles, MD): preferably less than 30, more preferably in the range of about 5-about 25%, most preferably less than 10-20; and/or

Permanent set (%) (50% extension, 6 cycles, TD): preferably less than 35%, more preferably in the range of about 5-about 25%; and/or

Permanent set (%) (100% extension, 6 cycles, MD): preferably less than 40%, more preferably in the range of about 5-about 35%, most preferably 8-20%; and/or

Permanent set (%) (100% extension, 6 cycles, TD): preferably less than 40%, more preferably in the range of about 5-about 35%, most preferably in the range of about 5 - 25%; and/or

Bond Temperature (°C) less than 110, more preferably in the range of 35-105, most preferably 40-80. These properties are preferred and have utility for all fabrics of the invention, and are demonstrated, for example, by a fabric made from fibers according to the invention and having a basis weight of 70 to 80 g/m$^2$, preferably about 70 g/m$^2$ and formed from fibers having diameter of 25-28 μm.

For meltblown fabric, according to the invention, the preferred properties follow:

Permanent set (%) (50% extension, 6 cycles, MD): preferably less than 25, more preferably in the range of 10-20, most preferably 15-18; and/or
Permanent set (%) (50% extension, 6 cycles, TD): preferably less than 25, more preferably in the range of 20, most preferably 15-18; and/or

Tensile modulus (g) (50% extension, 6 cycles, MD): preferably not more than 300, more preferably in the range of 200- 300; and/or
Tensile modulus (g) (50% extension, 6 cycles, TD): preferably less than 300, more preferably in the range of 50-150; about 150; and/or

Total Hand (g): preferably less than 75, more preferably less than 70, most preferably in the range of 10-20.

These properties are preferred and have utility for all fabrics of the invention, and are demonstrated, for example, by meltblown fabric with nominal basis weight of about 70g/m$^2$, according to the invention, made from fibers according to the invention of 8-10 μm diameter.

Various homofil fibers can be made from the copolymer of the present invention, including staple fibers, spunbond fibers or melt blown fibers (using, e.g., systems as disclosed in USP 4,340,563, 4,663,220, 4,668,566 or 4,322,027, and gel spun fibers (e.g., the system disclosed in USP 4,413,110). Staple fibers can be melt spun into the final fiber diameter directly without additional drawing, or they can be melt spun into a higher diameter and subsequently hot or cold drawn to the desired diameter using conventional fiber drawing techniques.

Bicomponent fibers can also be made from the copolymers of this invention. Such bicomponent fibers have the copolymer of the present invention in at least one portion of the fiber. For example, in a sheath/core bicomponent fiber (i.e., one in which the sheath concentrically surrounds the core), the polyolefin can be in either the sheath or the core. Typically and preferably, the copolymer is the sheath component of the bicomponent fiber but if it is the core component, then the sheath component must be such that it does not prevent the crosslinking of the core, i.e., the sheath component is transparent or translucent to UV-radiation such that sufficient UV-radiation can pass through it to substantially crosslink the core polymer. Different copolymers can also be used independently as the sheath and the core in the same fiber, preferably where both components are elastic and especially where the sheath component has a lower melting point than the core component. Other types of bicomponent fibers are within the scope of the invention as well, and include such structures as side-by-side conjugated fibers (e.g., fibers having separate regions of polymers, wherein the polyolefin of the present invention comprises at least a portion of the fiber's surface).

The shape of the fiber is not limited. For example, typical fiber has a circular cross-sectional shape, but sometimes fibers have different shapes, such as a trilobal shape, or a flat (i.e., "ribbon" like) shape. The fiber disclosed herein is not limited by the shape of the fiber.

Fiber diameter can be measured and reported in a variety of fashions. Generally, fiber diameter is measured in denier per filament. Denier is a textile term which is defined as the grams of the fiber per 9000 meters of that fiber's length. Monofilament generally refers to an extruded strand having a denier per filament greater than 15, usually greater than 30. Fine denier fiber generally refers to fiber having a denier of 15 or less. Micro denier (aka microfiber) generally refers to fiber having a diameter not greater than 100 micrometers. For the fibers of this invention, the diameter can be widely varied, with little impact upon the elasticity of the fiber. The fiber denier, however, can be adjusted to suit the capabilities of the finished article and as such, would preferably be: from 0.5 to 30 denier/filament for melt blown; from 1 to 30 denier/filament for spunbond; and from 1 to 20,000 denier/filament for continuous wound filament Nonetheless, preferably, the denier is greater than 40, more preferably greater than or equal to 55 and most preferably greater than or equal to 65. These preferences are due to the fact that typically durable apparel employ fibers with deniers greater than 40.

The elastic copolymer can also be shaped or fabricated into elastic films, coatings, sheets, strips, tapes, ribbons and the like. The elastic film, coating and sheet of the present invention may be fabricated by any method known in the art, including blown bubble processes (e.g., simple bubble as well as biaxial orientation techniques such trapped bubble, double bubble and tenter framing), cast extrusion, injection molding processes, thermoforming processes, extrusion coating processes, profile extrusion, and sheet extrusion processes. Simple blown bubble film processes are described, for example, in The Encyclopedia of Chemical Technology, Kirk-Othmer, Third Edition, John Wiley & Sons, New York, 1981, Vol. 16, pp. 416-417 and Vol. 18, pp. 191-192. The cast extrusion method is described, for example, in Modem Plastics Mid-October 1989 Encyclopedia Issue, Volume 66, Number 11, pages 256 to 257. Injection molding, thermoforming, extrusion coating, profile extrusion, and sheet extrusion processes are described, for example, in Plastics Materials and Processes, Seymour S. Schwartz and Sidney H. Goodman, Van Nostrand Reinhold Company, New York, 1982, pp. 527-563, pp. 632-647, and pp. 596-602.

The elastic strips, tapes and ribbons of the present invention can be prepared by any known method, including the direct extrusion processing or by post-extrusion slitting, cutting or stamping techniques. Profile extrusion is an example of a primary extrusion process that is particularly suited to the preparation of tapes, bands, ribbons and the like.

The fiber can be used with other fibers such as PET, nylon, cotton, Kevlar$^{tm}$, etc. to make elastic fabrics. As an added advantage, the heat (and moisture) resistance of certain fibers can enable polyester PET fibers to be dyed at ordinary PET dyeing conditions. The other commonly used fibers, especially spandex (e.g., Lycra$^{tm}$), can only be used at less severe PET dyeing conditions to prevent degradation of properties.

Fabrics made from the fibers of this invention include woven, nonwoven and knit fabrics. Nonwoven fabrics can be made various by methods, e.g., spunlaced (or hydrodynamically entangled) fabrics as disclosed in USP 3,485,706 and 4,939,016, carding and thermally bonding staple fibers; spunbonding continuous fibers in one continuous operation; or by melt blowing fibers into fabric and subsequently calandering or thermally bonding the resultant web. These various nonwoven fabric manufacturing techniques are well known to those skilled in the art and the disclosure is not limited to any particular method. Other structures made from such fibers are also included within the scope of the invention, including e.g., blends of these novel fibers with other fibers (e.g., poly(ethylene terephthalate) or cotton).

Nonwoven fabrics can be from fibers obtained from solution spinning or flash spinning the inventive ethylene/$\alpha$-olefin interpolmers. Solution spinning includes wet spinning and dry spinning. In both methods, a viscous solution of polymer is pumped through a filter and then passed through the fine holes of a spinnerette. The solvent is subsequently removed, leaving a fiber.

In some embodiments, the following process is used for flash spinning fibers and forming sheets from an inventive ethylene/α-olefin interpolmer. The basic system has been previously disclosed in U.S. Patents No. 3,860,369 and No. 6,117,801, which are hereby incorporated by reference herein in its entirety. The process is conducted in a chamber, sometimes referred to as a spin cell, which has a vapor-removal port and an opening through which non-woven sheet material produced in the process is removed. Polymer solution (or spin liquid) is continuously or batchwise prepared at an elevated temperature and pressure and provided to the spin cell via a conduit. The pressure of the solution is greater than the cloud-point pressure which is the lowest pressure at which the polymer is fully dissolved in the spin agent forming a homogeneous single phase mixture.

The single phase polymer solution passes through a letdown orifice into a lower pressure (or letdown) chamber. In the lower pressure chamber, the solution separates into a two-phase liquid-liquid dispersion. One phase of the dispersion is a spin agent-rich phase which comprises primarily the spin agent and the other phase of the dispersion is a polymer-rich phase which contains most of the polymer. This two phase liquid-liquid dispersion is forced through a spinneret into an area of much lower pressure (preferably atmospheric pressure) where the spin agent evaporates very rapidly (flashes), and the polymer emerges from the spinneret as a yarn (or plexifilament). The yarn is stretched in a tunnel and is directed to impact a rotating baffle. The rotating baffle has a shape that transforms the yarn into a flat web, which is about 5-15 cm wide, and separating the fibrils to open up the web. The rotating baffle further imparts a back and forth oscillating motion having sufficient amplitude to generate a wide back and forth swath. The web is laid down on a moving wire laydown belt located about 50 cm below the spinneret, and the back and forth oscillating motion is arranged to be generally across the belt to form a sheet.

As the web is deflected by the baffle on its way to the moving belt, it enters a corona charging zone between a stationary multi-needle ion gun and a grounded rotating target plate. The multi-needle ion gun is charged to a DC potential of by a suitable voltage source. The charged web is carried by a high velocity spin agent vapor stream through a diffuser consisting of two parts: a front section and a back section. The diffuser controls the expansion of the web and slows it down. The back section of the diffuser may be stationary and separate from target plate, or it may be integral with it. In the case where the back section and the target plate are integral, they rotate together. Aspiration holes are drilled in the back section of the diffuser to assure adequate flow of gas between the moving web and the diffuser back section to prevent sticking of the moving web to the diffuser back section. The moving belt is grounded through rolls so that the charged web is electrostatically attracted to the belt and held in place thereon. Overlapping web swaths collected on the moving belt and held there by electrostatic forces are formed into a sheet with a thickness controlled by the belt speed. The sheet is compressed between the belt and the consolidation roll into a structure having sufficient strength to be handled outside the chamber and then collected outside the chamber on a windup roll.

Accordingly, some embodiments of the invention provide a soft polymeric flash-spun plexifilamentary material comprising an inventive ethylene/α-olefin interpolymer described herein. Preferably, the ethylene/α-olefin interpolymer has a melt index from 0.1 to 50 g/10 min or from 0.4 to 10 g/10 min and a density from 0.85 to 0.95 g/cc or from 0.87 and 0.90 g/cc. Preferably, the molecular weight distribution of the interpolymer is greater than 1 but less than 4. Moreover, the flash-spun plexifilamentary material has a BET surface area of greater than 2 $m^2/g$ or greater than $8m^2/g$. A soft flash-spun nonwoven sheet material can be made from the soft polymeric flash-spun plexifilamentary material. The soft flash-spun nonwoven sheet material can be spunbonded, area bonded, or pointed bonded. Other embodiments of the invention provide a soft polymeric flash-spun plexifilamentary material comprising an ethylene/α-alpha interpolymer (described herein) blended with high density polyethylene polymer, wherein the ethylene/a-alpha interpolymer has a melt index of between 0.4 and 10 g/10 min, a density between 0.87 and 0.93 g/cc, and a molecular weight distribution less than 4, and wherein the plexifilamentary material has a BET surface area greater than 8 $m^2/g$. The soft flash-spun nonwoven sheet has an opacity of at least 85%.

Flash-spun nonwoven sheets made by a process similar to the foregoing process can used to replace Tyvek® spunbonded olefin sheets for air infiltration barriers in construction applications, as packaging such as air express envelopes, as medical packaging, as banners, and for protective apparel and other uses.

Fabricated articles which can be made using the fibers and fabrics of this invention include elastic composite articles (e.g., diapers) that have elastic portions. For example, elastic portions are typically constructed into diaper waist band portions to prevent the diaper from falling and leg band portions to prevent leakage (as shown in USP 4,381,781 (Sciaraffa), the disclosure of which is incorporated herein by reference). Often, the elastic portions promote better form fitting and/or fastening systems for a good combination of comfort and reliability. The inventive fibers and fabrics can also produce structures which combine elasticity with breathability. For example, the inventive fibers, fabrics and/or films may be incorporated into the structures disclosed in U.S. provisional patent application 60/083,784, filed May 1, 1998. Laminates of non-wovens comprising fibers of the invention can also be formed and can be used in various articles, including consumer goods, such as durables and disposable consumers goods, like apparel, diapers, hospital gowns, hygiene applications, upholstery fabrics, etc.

The inventive fibers, films and fabrics can also be used in various structures as described in USP 2,957,512. For example, layer 50 of the structure described in USP 512 (i.e., the elastic component) can be replaced with the

inventive fibers and fabrics, especially where flat, pleated, creped, crimped, etc., nonelastic materials are made into elastic structures. Attachment of the inventive fibers and/or fabric to nonfibers, fabrics or other structures can be done by melt bonding or with adhesives. Gathered or shirted elastic structures can be produced from the inventive fibers and/or fabrics and nonelastic components by pleating the non-elastic component (as described in Use ’512) prior to attachment, pre-stretching the elastic component prior to attachment, or heat shrinking the elastic component after attachment.

The inventive fibers also can be used in a spunlaced (or hydrodynamically entangled) process to make novel structures. For example, USP 4,801,482 discloses an elastic sheet (12) which can now be made with the novel fibers/films/fabric described herein.

Continuous elastic filaments as described herein can also be used in woven or knit applications where high resilience is desired.

USP 5,037,416 describes the advantages of a form fitting top sheet by using elastic ribbons (see member 19 of USP’ 416). The inventive fibers could serve the function of member 19 of USP ’416, or could be used in fabric form to provide the desired elasticity.

In U.S. Patent No. 4,981,747 (Morman), the inventive fibers and/or fabrics disclosed herein can be substituted for elastic sheet 122, which forms a composite elastic material including a reversibly necked material.

The inventive fibers can also be a melt blown elastic component, as described in reference 6 of the drawings of U.S. Patent No. 4,879,170 (Radwanski. U.S. Patent No. ’170 generally describes elastic co-form material and manufacturing processes.

Elastic panels can also be made from the inventive fibers and fabrics disclosed herein, and can be used, for example, as members 18, 20, 14, and/or 26 of U.S. Patent No. 4,940,464. The inventive fibers and fabrics described herein can also be used as elastic components of composite side panels (e.g., layer 86 of USP ’464).

The elastic materials of the present invention can also be rendered pervious or "breathable" by any method well known in the art including by apperturing, slitting, microperforating, mixing with fibers or foams, or the like and combinations thereof. Examples of such methods include, U.S. Patent No. 3,156,242 by Crowe, Jr., U.S. Patent No. 3,881,489 by Hartwell, U.S. Patent No. 3,989,867 by Sisson and U.S. Patent No. 5,085,654 by Buell.

The fibers in accordance with certain embodiments of the invention can covered fibers. Covered fibers comprise a core and a cover. For purposes of this invention, the core comprises one or more elastic fibers, and the cover comprises one or more inelastic fibers. At the time of the construction of the covered fiber and in their respective unstretched states, the cover is longer, typically significantly longer, than the core fiber. The cover surrounds the core in a conventional manner, typically in a spiral wrap configuration. Uncovered fibers are fibers without a cover. For purposes of this invention, a braided fiber or yarn, i.e., a fiber consisting of two or more fiber strands or filaments (elastic and/or inelastic) of about equal length in their respective unstretched states intertwined with or twisted about one another, is not a covered fiber. These yarns can, however, be used as either or both the core and cover of the covered fiber. For purposes of this invention, fibers consisting of an elastic core wrapped in an elastic cover are not covered fibers.

Full or substantial reversibility of heat-set stretch imparted to a fiber or fabric made from the fiber can be a useful property. For example, if a covered fiber can be heat-set before dyeing and/or weaving, then the dyeing and/or weaving processes are more efficient because the fiber is less likely to stretch during winding operations. This, in turn, can be useful in dyeing and weaving operations in which the fiber is first wound onto a spool. Once the dyeing and/or weaving is completed, then the covered fiber or fabric comprising the covered fiber can be relaxed. Not only does this technique reduce the amount of fiber necessary for a particular weaving operation, but it will also guard against subsequent shrinkage. Such reversible, heat-set, elastic fibers, and methods of making the fibers and articles made from such fibers are disclosed in U.S. Patent Application Serial No. 10/507,230 (published as US 20050165193), which is incorporated by reference herein in its entirety. Such methods can also be used in embodiments of the invention with or without modifications to make reversible, heat-set, elastic fibers, fabrics, and articles made therefrom.

Preactivated articles can be made according to the teachings of U.S. Patents No. 5,226,992, No. 4,981,747 (KCC, Morman), and No. 5,354,597.

High tenacity fibers can be made according to the teachings of U.S. Patents No. 6,113,656, No. 5,846,654, and No. 5,840,234.

Low denier fibers, including microdenier fibers, can be made from the inventive interpolymers.

<u>Blending with Another Polymer</u>

The propylene/α-olefin interpolymers can be blended with at least another polymer make fibers, such as polyolefin (e.g., polypropylene). A polyolefin is a polymer derived from two or more olefins (*i.e.*, alkenes). An olefin (*i.e.,* alkene) is a hydrocarbon contains at least one carbon-carbon double bond. The olefin can be a monoene (*i.e,* an olefin having a single carbon-carbon double bond), diene (*i.e*, an olefin having two carbon-carbon double bonds), triene (*i.e*, an olefin having three carbon-carbon double bonds), tetraene *(i.e,* an olefin having four carbon-carbon double bonds),

and other polyenes. The olefin or alkene, such as monoene, diene, triene, tetraene and other polyenes, can have 3 or more carbon atoms, 4 or more carbon atoms, 6 or more carbon atoms, 8 or more carbon atoms. In some embodiments, the olefin has from 3 to 100 carbon atoms, from 4 to 100 carbon atoms, from 6 to 100 carbon atoms, from 8 to 100 carbon atoms, from 3 to 50 carbon atoms, from 3 to 25 carbon atoms, from 4 to 25 carbon atoms, from 6 to 25 carbon atoms, from 8 to 25 carbon atoms, or from 3 to 10 carbon atoms. In some embodiments, the olefin is a linear or branched, cyclic or acyclic, monoene having from 2 to 20 carbon atoms. In other embodiments, the alkene is a diene such as butadiene and 1,5-hexadiene. In further embodiments, at least one of the hydrogen atoms of the alkene is substituted with an alkyl or aryl. In particular embodiments, the alkene is ethylene, propylene, 1-butene, 1-hexene, 1-octene, 1-decene, 4-methyl-1-pentene, norbornene, 1-decene, butadiene, 1,5-hexadiene, styrene or a combination thereof

The amount of the polyolefins in the polymer blend can be from 0.5 to 99 wt%, from 10 to 90 wt%, from 20 to 80 wt%, from 30 to 70 wt%, from 5 to 50 wt%, from 50 to 95 wt%, from 10 to 50 wt%, or from 50 to 90 wt% of the total weight of the polymer blend.

Any polyolefin known to a person of ordinary skill in the art may be used to prepare the polymer blend disclosed herein. The polyolefins can be olefin homopolymers, olefin copolymers, olefin terpolymers, olefin quaterpolymers and the like, and combinations thereof.

In some embodiments, one of the at least two polyolefins is an olefin homopolymer. The olefin homopolymer can be derived from one olefin. Any olefin homopolymer known to a person of ordinary skill in the art may be used. Non-limiting examples of olefin homopolymers include polyethylene (*e.g.*, ultralow, low, linear low, medium, high and ultrahigh density polyethylene), polypropylene, polybutylene (*e.g.*, polybutene-1), polypentene-1, polyhexene-1, polyoctene-1, polydecene-1, poly-3-methylbutene-1, poly-4-methylpentene-1, polyisoprene, polybutadiene, poly-1,5-hexadiene.

In further embodiments, the olefin homopolymer is a polypropylene. Any polypropylene known to a person of ordinary skill in the art may be used to prepare the polymer blends disclosed herein. Non-limiting examples of polypropylene include polypropylene (LDPP), high density polypropylene (HDPP), high melt strength polypropylene (HMS-PP), high impact polypropylene (HIPP), isotactic polypropylene (iPP), syndiotactic polypropylene (sPP) and the like, and combinations thereof.

The amount of the polypropylene in the polymer blend can be from 0.5 to 99 wt%, from 10 to 90 wt%, from 20 to a 80 we%, from 30 to 70 wt%, from 5 to 50 wt%, from 50 to 95 wt%, from 10 to 50 wt%, or from 50 to 90 wt% of the total weight of the polymer blend.

## Crosslinking

The fibers can be cross-linked by any means known in the art, including, but not limited to, electron-beam irradiation, beta irradiation, gamma irradiation, corona irradiation, silanes, peroxides, allyl compounds and UV radiation with or without crosslinking catalyst. U.S. Patent Application No. 10/086,057 (published as US-2002/0132923 Al) and U.S. Patent No. 6,803,014 disclose electron-beam irradiation methods that can be used in embodiments of the invention.

Irradiation may be accomplished by the use of high energy, ionizing electrons, ultra violet rays, X-rays, gamma rays, beta particles and the like and combination thereof. Preferably, electrons are employed up to 70 megarads dosages. The irradiation source can be any electron beam generator operating in a range of about 150 kilovolts to about 6 megavolts with a power output capable of supplying the desired dosage. The voltage can be adjusted to appropriate levels which may be, for example, 100,000, 300,000, 1,000,000 or 2,000,000 or 3,000,000 or 6,000,000 or higher or lower. Many other apparati for irradiating polymeric materials are known in the art. The irradiation is usually carried out at a dosage between 3 megarads to 35 megarads, preferably between 8 to 20 megarads. Further, the irradiation can be carried out conveniently at room temperature, although higher and lower temperatures, for example 0° C. to 60° C., may also be employed. Preferably, the irradiation is carried out after shaping or fabrication of the article. Also, in a preferred embodiment, the propylene interpolymer which has been incorporated with a pro-rad additive is irradiated with electron beam radiation at 8 to 20 megarads.

Crosslinking can be promoted with a crosslinking catalyst, and any catalyst that will provide this function can be used. Suitable catalysts generally include organic bases, carboxylic acids, and organometallic compounds including organic titanates and complexes or carboxylates of lead, cobalt, iron, nickel, zinc and tin. Dibutyltindilaurate, dioctyltinmaleate, dibutyltindiacetate, dibutyltindioctoate, stannous acetate, stannous octoate, lead naphthenate, zinc caprylate, cobalt naphthenate; and the like. Tin carboxylate, especially dibutyltindilaurate and dioctyltinmaleate, are particularly effective for this invention. The catalyst (or mixture of catalysts) is present in a catalytic amount, typically between 0.015 and 0.035 phr.

Representative pro-rad additives include, but are not limited to, azo compounds, organic peroxides and polyfunctional vinyl or allyl compounds such as, for example, triallyl cyanurate, triallyl isocyanurate, pentaerthritol tetramethacrylate, glutaraldehyde, ethylene glycol dimethacrylate, diallyl maleate, dipropargyl maleate, dipropargyl monoallyl cyanurate, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di(t-butyl peroxy)hexane, lauryl peroxide, tert-butyl

peracetate, azobisisobutyl nitrite and the like and combination thereof. Preferred pro-rad additives for use in the present invention are compounds which have poly-functional (i.e. at least two) moieties such as C=C, C=N or C=O.

At least one pro-rad additive can be introduced to the propylene interpolymer by any method known in the art. However, preferably the pro-rad additive(s) is introduced via a masterbatch concentrate comprising the same or different base resin as the propylene interpolymer. Preferably, the pro-rad additive concentration for the masterbatch is relatively high e.g., about 25 weight percent (based on the total weight of the concentrate).

The at least one pro-rad additive is introduced to the propylene polymer in any effective amount. Preferably, the at least one pro-rad additive introduction amount is from 0.001 to 5 weight percent, more preferably from 0.005 to 2.5 weight percent and most preferably from 0.015 to 1 weight percent (based on the total weight of the propylene interpolymer.

In addition to electron-beam irradiation, crosslinking can also be effected by UV irradiation. U.S. Patent No. 6,709,742 discloses a cross-linking method by UV irradiation which can be used in embodiments of the invention. The method comprises mixing a photoinitiator, with or without a photocrosslinker, with a polymer before, during, or after a fiber is formed and then exposing the fiber with the photoinitiator to sufficient UV radiation to crosslink the polymer to the desired level. The photoinitiators used in the practice of the invention are aromatic ketones, e.g., benzophenones or monoacetals of 1,2-diketones. The primary photoreaction of the monacetals is the homolytic cleavage of the $\alpha$-bond to give acyl and dialkoxyalkyl radicals. This type of $\alpha$-cleavage is known as a Norrish Type I reaction which is more fully described in W. Horspool and D. Armesto, Organic Photochemistry: A ComDrehensive Treatment, Ellis Horwood Limited, Chichester, England, 1992; J. Kopecky, Organic Photochemistry: A Visual Approach, VCH Publishers, Inc., New York, NY 1992; N.J. Turro, et al., Ace. Chem. Res., 1972, 5, 92; and J.T. Banks, et al., J. Am. Chem. Soc., 1993, 115, 2473. The synthesis of monoacetals of aromatic 1,2 diketones, Ar-CO-$C(OR)_2$-Ar' is described in USP 4,190,602 and Ger. Offen. 2,337,813. The preferred compound from this class is 2,2-dimethoxy-2-phenylacetophenone, $C_6H_5$-CO-C$(OCH_3)_2$-$C_6H_5$, which is commercially available from Ciba-Geigy as Irgacure 651. Examples of other aromatic ketones useful in the practice of this invention as photoinitiators are Irgacure 184, 369, 819, 907 and 2959, all available from Ciba-Geigy.

In one embodiment of the invention, the photoinitiator is used in combination with a photocrosslinker. Any photocrosslinker that will upon the generation of free radicals, link two or more polyolefin backbones together through the formation of covalent bonds with the backbones can be used in this invention. Preferably these photocrosslinkers are polyfunctional, i.e., they comprise two or more sites that upon activation will form a covalent bond with a site on the backbone of the copolymer. Representative photocrosslinkers include, but are not limited to polyfunctional vinyl or allyl compounds such as, for example, triallyl cyanurate, triallyl isocyanurate, pentaerthritol tetramethacrylate, ethylene glycol dimethacrylate, diallyl maleate, dipropargyl maleate, dipropargyl monoallyl cyanurate and the like. Preferred photocrosslinkers for use in the present invention are compounds which have polyfunctional (i.e. at least two) moieties. Particularly preferred photocrosslinkers are triallycyanurate (TAC) and triallylisocyanurate (TAIC).

Certain compounds act as both a photoinitiator and a photocrosslinker in the practice of this invention. These compounds are characterized by the ability to generate two or more reactive species (e.g., free radicals, carbenes, nitrenes, etc.) upon exposure to UV-light and to subsequently covalently bond with two polymer chains. Any compound that can preform these two functions can be used in the practice of this invention, and representative compounds include the sulfonyl azides described in USP 6,211,302 and 6,284,842.

In another embodiment of this invention, the copolymer is subjected to secondary crosslinking, i.e., crosslinking other than and in addition to photocrosslinking. In this embodiment, the photoinitiator is used either in combination with a nonphotocrosslinker, e.g., a silane, or the copolymer is subjected to a secondary crosslinking procedure, e.g, exposure to E-beam radiation. Representative examples of silane crosslinkers are described in USP 5,824,718, and crosslinking through exposure to E-beam radiation is described in USP 5,525,257 and 5,324,576. The use of a photocrosslinker in this embodiment is optional.

At least one photoadditive, i.e., photoinitiator and optional photocrosslinker, can be introduced to the copolymer by any method known in the art. However, preferably the photoadditive(s) is (are) introduced via a masterbatch concentrate comprising the same or different base resin as the copolymer. Preferably ,the photoadditive concentration for the masterbatch is relatively high e.g., about 25 weight percent (based on the total weight of the concentrate).

The at least one photoadditive is introduced to the copolymer in any effective amount. Preferably, the at least one photoadditive introduction amount is from 0.001 to 5, more preferably from 0.005 to 2.5 and most preferably from 0.015 to 1, wt % (based on the total weight of the copolymer).

The photoinitiator(s) and optional photocrosslinker(s) can be added during different stages of the fiber or film manufacturing process. If photoadditives can withstand the extrusion temperature, a polyolefin resin can be mixed with additives before being fed into the extruder, e.g., via a masterbatch addition. Alternatively, additives can be introduced into the extruder just prior the slot die, but in this case the efficient mixing of components before extrusion is important. In another approach, polyolefin fibers can be drawn without photoadditives, and a photoinitiator and/or photocrosslinker can be applied to the extruded fiber via a kiss-roll, spray, dipping into a solution with additives, or by using other industrial

methods for post-treatment. The resulting fiber with photoadditive(s) is then cured via electromagnetic radiation in a continuous or batch process. The photo additives can be blended with the polyolefin using conventional compounding equipment, including single and twin-screw extruders.

The power of the electromagnetic radiation and the irradiation time are chosen so as to allow efficient crosslinking without polymer degradation and/or dimensional defects. The preferred process is described in EP 0 490 854 B1. Photoadditive(s) with sufficient thermal stability is (are) premixed with a polyolefin resin, extruded into a fiber, and irradiated in a continuous process using one energy source or several units linked in a series. There are several advantages to using a continuous process compared with a batch process to cure a fiber or sheet of a knitted fabric which are collected onto a spool.

Irradiation may be accomplished by the use of UV-radiation. Preferably, UV-radiation is employed up to the intensity of 100 J/cm$^2$. The irradiation source can be any UV-light generator operating in a range of 50 watts to 25000 watts with a power output capable of supplying the desired dosage. The wattage can be adjusted to appropriate levels which may be, for example, 1000 watts or 4800 watts or 6000 watts or higher or lower. Many other apparati for UV-irradiating polymeric materials are known in the art. The irradiation is usually carried out at a dosage between 3 J/cm$^2$ to 500 J/scm$^2$, preferably between 5 J/cm$^2$ to 100 J/cm$^2$. Further, the irradiation can be carried out conveniently at room temperature, although higher and lower temperatures, for example 0°C to 60°C, may also be employed. The photocrosslinking process is faster at higher temperatures. Preferably, the irradiation is carried out after shaping or fabrication of the article. In a preferred embodiment, the copolymer which has been incorporated with a photoadditive is irradiated with UV-radiation at 10 J/cm$^2$ to 50 J/cm$^2$.

Other Additives

Antioxidants, e.g., Irgafos 168, Irganox 1010, Irganox 3790, and chimassorb 944 made by Ciba Geigy Corp., may be added to the propylene polymer to protect against undo degradation during shaping or fabrication operation and/or to better control the extent of grafting or crosslinking (i.e., inhibit excessive gelation). In-process additives, e.g. calcium stearate, water, fluoropolymers, etc., may also be used for purposes such as for the deactivation of residual catalyst and/or improved processability. Tinuvin 770 (from Ciba-Geigy) can be used as a light stabilizer.

The copolymer can be filled or unfilled. If filled, then the amount of filler present should not exceed an amount that would adversely affect either heat-resistance or elasticity at an elevated temperature. If present, typically the amount of filler is between 0.01 and 80 wt % based on the total weight of the copolymer (or if a blend of a copolymer and one or more other polymers, then the total weight of the blend). Representative fillers include kaolin clay, magnesium hydroxide, zinc oxide, silica and calcium carbonate. In a preferred embodiment, in which a filler is present, the filler is coated with a material that will prevent or retard any tendency that the filler might otherwise have to interfere with the crosslinking reactions. Stearic acid is illustrative of such a filler coating.

To reduced the friction coefficient of the fibers, various spin finish formulations can be used, such as metallic soaps dispersed in textile oils (see for example US 3,039,895 or US 6,652,599), surfactants in a base oil (see for example US publication 2003/0024052) and polyalkylsiolxanes (see for example US 3,296,063 or US 4,999,120). U.S. Patent Application No. 10/933,721 (published as US20050142360) discloses spin finish compositions that can also be used.

The following examples are presented to exemplify embodiments of the invention but are not intended to limit the invention to the specific embodiments set forth. Unless indicated to the contrary, all parts and percentages are by weight. All numerical values are approximate. When numerical ranges are given, it should be understood that embodiments outside the stated ranges may still fall within the scope of the invention. Specific details described in each example should not be construed as necessary features of the invention.

Example 1

A propylene/ethylene block copolymer having about 12% weight percent ethylene and about 88% weight percent propylene (composition of soft segments), a melt flow rate, MFR, measured at ASTM D 1238, condition 230 °C/ 2.16 kg, of about 25 g/10 minutes, and an overall density of about 0.877 g/cm$^3$, and an estimated hard segment content of about 30% and soft segment content of about 70% is melt spun into fine denier fiber (less than about 4 denier/filament) using a spunbonded apparatus. The melt spinning temperature is about 245 °C, the throughput is about 0.5 ghm (grams/min/hole) and the fibers are drawn in the melt from a spinnerette diameter of about 600 microns down to the fiber diameter of from about 2 to less than about 4 denier per filament. The resulting nonwoven fabric is then thermally bonded under temperature of about 200-220 °C and a pressure sufficient to point bond the fibers. The individual fibers are measured for mechanical properties, and have a tensile strength of about 0.5-1 grams/denier, an elongation to break of from about 150-270 %, a permanent set of about 3-12% (2-cycle hysteresis at 100% strain) a modulus of about 5-15 grams/denier, and a melting point of about 160 °C. The resultant nonwoven fabric has a basis weight of about 30 g/m$^2$ and physical properties of MD elongation at break of about 200%, and CD elongation at break of about 330%, MD %

set of about 8% and CD % set of about 8%.

Example 2

A propylene/ethylene block copolymer having about 12% weight percent ethylene and about 88% weight percent propylene, a melt flow rate, MFR, measured at ASTM D 1238, condition 230 °C/2.16 kg, of about 9 g/10 minutes, and an overall density of about 0.875 g/cm$^3$, and an estimated hard segment content of about 30% and soft segment content of about 70% is melt spun into about 40 denier fiber (monofilament) using a melt spinning apparatus. The melt spinning temperature is about 245 °C and the fibers are drawn in the melt from a spinnerette diameter of about 800 microns down to the fiber diameter corresponding to 40 denier at a take-up speed of about 550 m/min. The fibers in the form of spools are measured for mechanical properties (prior to cross-linking), and have a tensile strength of about 1-1.5 grams/denier, an elongation to break of 450-500 %, a permanent set of about 40-60% (5-cycle 300% strain, BISFA method) and a melting point of about 160 °C.

Example 3

A propylene/ethylene block copolymer having about 12% weight percent ethylene and about 88% weight percent propylene (composition of soft segments), a melt flow rate, MFR, measured at ASTM D 1238, condition 230 °C/2.16 kg, of about 50g/10 minutes, and an overall density of about 0.877 g/cm$^3$, and an estimated hard segment content of about 30% and soft segment content of about 70% is melt spun into micro-denier fiber (less than about 1.5 denier/filament) using a spunbonded apparatus. The melt spinning temperature is about 245 °C, the throughput is 0.5 ghm (grams/min/hole) and the fibers are drawn in the melt from a spinnerette diameter of about 600 microns down to the fiber diameter of from about 1-1.5 denier per filament. The individual fibers are measured for mechanical properties, and have a tensile strength of about 2.5-3 grams/denier, an elongation to break of from about 50-100 %, a permanent set of about 35-45% (2-cycle hysterisis at 100% strain) and a melting point of about 160 °C.

As described above, embodiments of the invention provide fibers made from unique multi-block copolymers of propylene and $\alpha$-olefin. The fibers may have one or more of the following advantages: good abrasion resistance; low coefficient of friction; high upper service temperature; high recovery/retractive force; low stress relaxation (high and low temperatures); soft stretch; high elongation at break; inert: chemical resistance; UV resistance. The fibers can be melt spun at a relatively high spin rate and lower temperature. The fibers can be crosslinked by electron beam or other irradiation methods. In addition, the fibers are less sticky, resulting in better unwind performance and better shelf life, and are substantially free of roping (i.e., fiber bundling). Because the fibers can be spun at a higher spin rate, the fibers' production throughput is high. Such fibers also have broad formation windows and broad processing windows. Other advantages and characteristics are apparent to those skilled in the art.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. The method of making the resins is described as comprising a number of acts or steps. These steps or acts may be practiced in any sequence or order unless otherwise indicated. Finally, any number disclosed herein should be construed to mean approximate, regardless of whether the word "about" or "approximately" is used in describing the number. The appended claims intend to cover all those modifications and variations as falling within the scope of the invention.

**Claims**

1. A fiber obtainable from or comprising a propylene/$\alpha$-olefin multi-block interpolymer comprised of at least 50 mole percent, of the whole polymer, of propylene, wherein the propylene/$\alpha$-olefin multi-block interpolymer is **characterized by** one or more of the following properties:

   (a) a $M_w/M_n$ from 1.7 to 3.5, at least one melting point, $T_m$, in degrees Celsius, and a density, d, in grams/cubic centimeter, wherein the numerical values of Tm and d correspond to the relationship:

$$T_m > -2002.9 + 4538.5(d) - 2422.2(d)^2;$$

or

(b) a $M_w/M_n$ from 1.7 to 3.5, and a heat of fusion, ΔH in J/g, and a delta quantity, ΔT, in degrees Celsius defined as the temperature difference between the tallest DSC peak and the tallest CRYSTAF peak, wherein the numerical values of ΔαT and ΔH have the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g,}$$

wherein the CRYSTAF peak is determined using at least 5 percent of the cumulative polymer, and if less than 5 percent of the polymer has an identifiable CRYSTAF peak, then the CRYSTAF temperature is 30°C; or

(c) an elastic recovery, Re, in percent at 300 percent strain and 1 cycle measured with a compression-molded film of the propylene/α-olefin interpolymer, and a density, d, in grams/cubic centimeter, wherein the numerical values of Re and d satisfy the following relationship when propylene/α-olefin multi-block interpolymer is substantially free of a cross-linked phase:

$$Re > 1481 - 1629(d);$$

or

(d) a comonomer content in the TREF fraction which elutes between 40°C and 130°C greater than or equal to the quantity (-0.2013)T + 21.07, where T is the numerical value of the peak ATREF elution temperature measured in °C.

2. The fiber of claim 1, wherein the propylene/α-olefin multi-block interpolymer is **characterized by** an elastic recovery, $R_e$, in percent at 300 percent strain and 1 cycle measured from a compression-molded film of the propylene/α-olefin multi-block interpolymer and a density, d, in grams/cubic centimeter, wherein the elastic recovery and the density satisfy the following relationship when propylene/α-olefin interpolymer is substantially free of a cross-linked phase:

$$R_e > 1481 - 1629(d)$$

3. The fiber of claim 1, wherein the propylene/α-olefin multi-block interpolymer has at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2$$

and wherein the interpolymer has a $M_w/M_n$ from 1.7 to 3.5.

4. The fiber of claim 1, wherein the propylene/α-olefin multi-block interpolymer has a $M_w/M_n$ from 1.7 to 3.5, and the interpolymer is **characterized by** a heat of fusion, ΔH, in J/g, and a delta quantity, ΔT in degrees Celsius defined as the difference between the tallest DSC peak minus the tallest CRYSTAF peak, the ΔT and ΔH meet the following relationships:

$$\Delta T > -0.1299(\Delta H) + 62.81, \text{ for } \Delta H \text{ greater than zero and up to 130 J/g,}$$

or

$$\Delta T \geq 48°C \text{ for } \Delta H \text{ greater than 130 J/g,}$$

wherein the CRYSTAF peak is determined using at least 5 percent of the cumulative polymer, and if less than 5 percent of the polymer has an identifiable CRYSTAF peak, then the CRYSTAF temperature is 30°C.

**5.** A fiber obtainable from or comprising a propylene/α-olefin multi-block interpolymer comprised of at least 50 mole percent, of the whole polymer, of propylene, wherein the propylene/α-olefin multi-block interpolymer is **characterized by** having an average block index of from 0.1 up to 0.3 and a molecular weight distribution, $M_w/M_n$, greater than 1.3.

**6.** A fiber obtainable from or comprising at least one multi-block interpolymer of propylene and $C_2$ or $C_4$-$C_{20}$ α-olefin, said interpolymer being comprised of at least 50 mole percent, of the whole polymer, of propylene, wherein the interpolymer has a density from 0.860 g/cc to 0.895 g/cc and a compression set at 70°C. of less than 70%.

**7.** The fiber of claim 1, 2, 3, 4, or 5, wherein the α-olefin is styrene, ethylene, 1-butene, 1-hexene, 1-octene, 4- methyl-1-pentene, 1-decene, or a combination thereof.

**8.** The fiber of claim 1, 2, 3, 4, or 5, wherein the fiber is cross-linked.

**9.** The fiber of claim 1, 2, 3, 4, or 5, wherein the propylene/α-olefin multiblock interpolymer is blended with another polymer.

**10.** The fiber of claim 1, 2, 3, 4, or 5, wherein the fiber is a bicomponent fiber.

**11.** The fiber of claim 8, wherein the cross-linking is effected by photon irradiation, electron beam irradiation, or a cross-linking agent.

**12.** The fiber of claim 8, the percent of cross-linking polymer is at least 20 percent as measured by the weight percent of gels formed.

**13.** The fiber of claim 1, 2, 3, 4, 5, or 6, wherein the fiber has coefficient of friction of less than 1.2, wherein the interpolymer is not mixed with any filler.

**14.** A fabric comprising the fiber of claim 1, 2, 3, 4, 5, or 6.

**15.** The fabric of claim 14, wherein the fabric comprises fibers made by solution spinning.

**16.** The fabric of claim 14, wherein the fabric is elastic.

**17.** The fabric of claim 14, wherein the fabric is woven.

**18.** The fabric of claim 14, wherein the fabric has an MD percent recovery of at least 50 percent at 100 percent strain.

**19.** A yarn comprising the fiber of claim 1, 2, 3, 4, 5, or 6.

**20.** The yarn of claim 19, wherein the yarn is covered.

**21.** The yarn of claim 20, where the yarn is covered by cotton yarns or nylon yarns.

**22.** A method of making a fiber, comprising:

melting a propylene/α-olefin multi-block interpolymer said interpolymer being comprised of at least 50 mole percent, of the whole polymer, of propylene; and
extruding the propylene/α-olefin multi-block interpolymer into a fiber, wherein the propylene/α-olefin multi-block interpolymer is **characterized by** one or more of the following properties:

(a) a $M_w/M_n$ from 1.7 to 3.5, at least one melting point, $T_m$, in degrees Celsius, and a density, d, in grams/cubic centimeter, wherein the numerical values of $T_m$ and d correspond to the relationship:

$$T_m \geq 858.91 - 1825.3(d) + 1112.8(d)^2;$$

or

(b) a $M_w/M_n$ from 1.7 to 3.5, and a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to } 130 \text{ J/g},$$

$$\Delta T \geq 48°C \text{ for } \Delta H \text{ greater than } 130 \text{ J/g},$$

wherein the CRYSTAF peak is determined using at least 5 percent of the cumulative polymer, and if less than 5 percent of the polymer has an identifiable CRYSTAF peak, then the CRYSTAF temperature is 30°C; or

(c) an elastic recovery, Re, in percent at 300 percent strain and 1 cycle measured with a compression-molded film of the propylene/α-olefin multiblock interpolymer, and a density, d, in grams/cubic centimeter, wherein the numerical values of Re and d satisfy the following relationship when the propylene/α-olefin multi-block interpolymer is substantially free of a cross-linked phase:

$$Re > 1481 - 1629(d);$$

or

(d) a comonomer content of the TREF fraction which elutes between 40°C and 130°C greater than or equal to the quantity (-0.2013)T + 21.07, wherein T is the numerical value of the peak ATREF elution temperature measured in °C.

**23.** The method of claim 22, wherein a fabric formed from the fiber is substantially free of roping.

**Patentansprüche**

**1.** Faser, die aus einem Propylen/α-Olefin-Mehrblock-Interpolymer, das zu mindestens 50 mol-%, des gesamten Polymers, aus Propylen besteht, hergestellt werden kann oder dieses umfasst, wobei das Propylen/α-Olefin-Mehrblock-Interpolymer **gekennzeichnet ist durch** eine oder mehrere der folgenden Eigenschaften:

(a) ein $M_w/M_n$ von 1,7 bis 3,5, mindestens einen Schmelzpunkt, $T_m$, in Grad Celsius, und eine Dichte, d, in Gramm/Kubikzentimeter, wobei die Zahlenwerte von $T_m$ und d der folgenden Beziehung entsprechen:

$$T_m > -2002{,}9 + 4538{,}5(d) - 2422{,}2(d)^2;$$

oder

(b) ein $M_w/M_n$ von 1,7 bis 3,5 und eine Schmelzwärme, ΔH in J/g, und ein Delta Menge, ΔT, in Grad Celsius, definiert als Temperaturunterschied zwischen dem höchsten DSK-Peak und dem höchsten CRYSTAF-Peak, wobei die Zahlenwerte von ΔT und ΔH die folgenden Beziehungen haben:

$$\Delta T > -0{,}1299(\Delta H) + 62{,}81 \text{ für } \Delta H \text{ größer als null und bis zu } 130 \text{ J/g},$$

$$\Delta T \geq 48°C \text{ für } \Delta H \text{ größer als } 130 \text{ J/g},$$

wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak haben, dann beträgt die CRYSTAF-Temperatur 30°C; oder

(c) eine elastische Rückstellung, Re, in Prozent bei 300 Prozent Dehnung und 1 Zyklus, gemessen an einer formgepressten Folie aus dem Propylen/α-Olefin-Interpolymer, und eine Dichte, d, in Gramm/Kubikzentimeter, wobei die Zahlenwerte von Re und d der folgenden Beziehung genügen, wenn das Propylen/α-Olefin-Mehrblock-Interpolymer im Wesentlichen frei ist von einer vernetzten Phase:

$$Re > 1481 - 1629(d);$$

oder

(d) einen Comonomergehalt in der TREF-Fraktion, die zwischen 40°C und 130°C eluiert, von größer oder gleich der Menge (-0,2013)T + 21,07, wobei T der Zahlenwert der in °C gemessenen maximalen ATREF-Elutionstemperatur ist.

2. Faser nach Anspruch 1, wobei das Propylen/α-Olefin-Mehrblock-Interpolymer **gekennzeichnet ist durch** eine elastische Rückstellung, Re, in Prozent bei 300 Prozent Dehnung und 1 Zyklus, gemessen an einer formgepressten Folie aus dem Propylen/α-Olefin-Mehrblock-Interpolymer, und eine Dichte, d, in Gramm/Kubikzentimeter, wobei die elastische Rückstellung und die Dichte der folgenden Beziehung genügen, wenn das Propylen/α-Olefin-Interpolymer im Wesentlichen frei ist von einer vernetzten Phase:

$$Re > 1481 - 1629(d)$$

3. Faser nach Anspruch 1, wobei das Propylen/α-Olefin-Mehrblock-Interpolymer mindestens einen Schmelzpunkt, $T_m$, in Grad Celsius und eine Dichte, d, in Gramm/Kubikzentimeter hat, wobei die Zahlenwerte der Variablen der folgenden Beziehung entsprechen:

$$T_m > -2002{,}9 + 4538{,}5(d) - 2422{,}2(d)^2$$

und wobei das Interpolymer ein $M_w/M_n$ von 1,7 bis 3,5 hat.

4. Faser nach Anspruch 1, wobei das Propylen/α-Olefin-Mehrblock-Interpolymer ein $M_w/M_n$ von 1,7 bis 3,5 hat und das Interpolymer **gekennzeichnet ist durch** eine Schmelzwärme, ΔH, in J/g, und ein Delta Menge, ΔT, in Grad Celsius, definiert als Differenz zwischen dem höchsten DSK-Peak minus dem höchsten CRYSTAF-Peak; wobei ΔT und ΔH den folgenden Beziehungen genügen:

$$\Delta T > -0{,}1299(\Delta H) + 62{,}81 \text{ für } \Delta H \text{ größer als null und bis zu } 130 \text{ J/g},$$

oder

$$\Delta T \geq 48°C \text{ für } \Delta H \text{ größer als } 130 \text{ J/g},$$

wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak haben, dann beträgt die CRYSTAF-Temperatur 30°C.

5. Faser, die aus einem Propylen/α-Olefin-Mehrblock-Interpolymer, das zu mindestens 50 mol-%, des gesamten Polymers, aus Propylen besteht, hergestellt werden kann oder dieses umfasst, wobei das Propylen/α-Olefin-Mehrblock-Interpolymer **dadurch gekennzeichnet ist, dass** es einen durchschnittlichen Blockindex von 0,1 bis 0,3 und eine Molekulargewichtsverteilung, $M_w/M_n$, größer als 1,3 hat.

6. Faser, die aus mindestens einem Mehrblock-Interpolymer von Propylen und $C_2$- oder $C_4$-$C_{20}$-α-Olefin hergestellt werden kann oder dieses umfasst, wobei das Interpolymer zu mindestens 50 mol-%, des gesamten Polymers, aus Propylen besteht, wobei das Interpolymer eine Dichte von 0,860 g/cm$^3$ bis 0,895 g/cm$^3$ und einen Druckverformungsrest bei 70°C von weniger als 70% besitzt.

7. Faser nach Anspruch 1, 2, 3, 4 oder 5, wobei das α-Olefin Styrol, Ethylen, 1-Buten, 1-Hexen, 1-Octen, 4-Methyl-1-penten, 1-Decen oder eine Kombination davon ist.

8. Faser nach Anspruch 1, 2, 3, 4 oder 5, wobei die Faser vernetzt ist.

9. Faser nach Anspruch 1, 2, 3, 4 oder 5, wobei das Propylen/α-Olefin-Mehrblock-Interpolymer mit einem anderen Polymer vermischt ist.

10. Faser nach Ansrpuch 1, 2, 3, 4 oder 5, wobei die Faser eine Bikomponentenfaser ist.

11. Faser nach Anspruch 8, wobei die Vernetzung durch Photonenbestrahlung, Elektronenstrahlbestrahlung oder ein Vernetzungsmittel erfolgt.

12. Faser nach Anspruch 8, wobei der Prozentsatz an vernetzendem Polymer mindestens 20 Prozent beträgt, gemessen anhand der Gewichtsprozent der gebildeten Gele.

13. Faser nach Anspruch 1, 2, 3, 4, 5 oder 6, wobei die Faser einen Reibungskoeffizienten von weniger als 1,2 besitzt, wobei das Interpolymer mit keinem Füllstoff gemischt ist.

14. Stoff aus der Faser nach Anspruch 1, 2, 3, 4, 5 oder 6.

15. Stoff nach Anspruch 14, wobei der Stoff durch Lösungsspinnen hergestellte Fasern umfasst.

16. Stoff nach Anspruch 14, wobei der Stoff elastisch ist.

17. Stoff nach Anspruch 14, wobei der Stoff gewebt ist.

18. Stoff nach Anspruch 14, wobei der Stoff eine prozentuale Rückstellung in Maschinenrichtung von mindestens 50 Prozent bei 100 Prozent Dehnung besitzt.

19. Garn aus der Faser nach Anspruch 1, 2, 3, 4, 5 oder 6.

20. Garn nach Anspruch 19, wobei das Garn umsponnen ist.

21. Garn nach Anspruch 20, wobei das Garn mit Baumwollfäden oder Nylonfäden umsponnen ist.

22. Verfahren zur Herstellung einer Faser, mit den folgenden Schritten:

Schmelzen eines Propylen/α-Olefin-Mehrblock-Interpolymers, wobei das Interpolymer zu mindestens 50 mol-%, des gesamten Polymers, aus Propylen besteht; und
Extrudieren des Propylen/α-Olefin-Mehrblock-Interpolymers zu einer Faser, wobei das Propylen/α-Olefin-Mehrblock-Interpolymer **gekennzeichnet ist durch** eine oder mehrere der folgenden Eigenschaften:

(a) ein $M_w/M_n$ von 1,7 bis 3,5, mindestens einen Schmelzpunkt, $T_m$, in Grad Celsius, und eine Dichte, d, in Gramm/Kubikzentimeter, wobei die Zahlenwerte von $T_m$ und d der folgenden Beziehung entsprechen:

$$T_m \geq 858{,}91 - 1825{,}3(d) + 1112{,}8(d)^2;$$

oder

(b) ein $M_w/M_n$ von 1,7 bis 3,5 und eine Schmelzwärme, ΔH in J/g, und ein Delta Menge, ΔT, in Grad Celsius, definiert als Temperaturunterschied zwischen dem höchsten DSK-Peak und dem höchsten CRYSTAF-Peak, wobei die Zahlenwerte von ΔT und ΔH die folgenden Beziehungen haben:

$$\Delta T > -0{,}1299(\Delta H) + 62{,}81 \text{ für } \Delta H \text{ größer als null und bis zu } 130 \text{ J/g},$$

$$\Delta T \geq 48°C \text{ für } \Delta H \text{ größer als } 130 \text{ J/g},$$

wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak haben, dann beträgt die CRYSTAF-Temperatur 30°C; oder

(c) eine elastische Rückstellung, Re, in Prozent bei 300 Prozent Dehnung und 1 Zyklus, gemessen an einer formgepressten Folie aus dem Propylen/α-Olefin-Mehrblock-Interpolymer, und eine Dichte, d, in Gramm/Kubikzentimeter, wobei die Zahlenwerte von Re und d der folgenden Beziehung genügen, wenn das Propylen/α-Olefin-Mehrblock-Interpolymer im Wesentlichen frei ist von einer vernetzten Phase:

$$Re > 1481 - 1629(d);$$

oder

(d) einen Comonomergehalt der TREF-Fraktion, die zwischen 40°C und 130°C eluiert, von größer oder gleich der Menge (-0,2013)T + 21,07, wobei T der Zahlenwert der in °C gemessenen maximalen ATREF-Elutionstemperatur ist.

**23.** Verfahren nach Anspruch 22, wobei ein aus der Faser gebildeter Stoff im Wesentlichen frei von Schnurbildung ist.

**Revendications**

**1.** Fibre accessible à partir d'un interpolymère multibloc de propylène et d'alpha-oléfine ou comprenant un tel interpolymère, lequel est constitué de propylène pour au moins 50 % en moles de tout le polymère, dans laquelle fibre l'interpolymère multibloc de propylène et d'alpha-oléfine est **caractérisé par** l'une ou plusieurs des propriétés suivantes :

a) il présente un indice $M_w/M_n$ valant de 1,7 à 3,5, et au moins un point de fusion Tm et une masse volumique d dont les valeurs numériques, exprimées respectivement en degrés Celsius et en grammes par centimètre-cube, vérifient l'inégalité suivante :

$$T_m > -2002{,}9 + 4538{,}5(d) - 2422{,}2(d)^2 \ ;$$

b) ou il présente un indice $M_w/M_n$ valant de 1,7 à 3,5, et une chaleur de fusion ΔH, exprimée en J/g, et une quantité ΔT, exprimée en degrés Celsius et définie comme étant la différence de température entre le plus grand pic observé en analyse AED et le plus grand pic observé en analyse CRYSTAF, dont les valeurs numériques vérifient les inégalités suivantes :

pour

$$0 < \Delta H \leq 130 \text{ J/g}, \ \Delta T > -0{,}1299(\Delta H) + 62{,}81$$

et pour

$$\Delta H > 130\ J/g,\ \Delta T \geq 48\ °C,$$

étant entendu que le pic CRYSTAF est déterminé pour au moins 5 % de polymère en pourcentage cumulé, et que l'on prend la valeur de 30 °C pour la température du pic CRYSTAF si une fraction de moins de 5 % du polymère donne un pic CRYSTAF identifiable ;
c) ou il présente une recouvrance élastique Re pour une déformation de 300 % et 1 cycle, exprimée en pourcentage et mesurée sur un film de l'interpolymère de propylène et d'alpha-oléfine obtenu par moulage par compression, et une masse volumique d, exprimée en grammes par centimètre-cube, dont les valeurs numériques vérifient l'inégalité suivante quand l'interpolymère multibloc de propylène et d'alpha-oléfine ne contient pratiquement pas de phase réticulée :

$$Re > 1481 - 1629(d)\ ;$$

d) ou il présente, dans la fraction éluée entre 40 et 130 °C en fractionnement TREF, une teneur en comonomère qui est supérieure ou égale à la valeur de l'expression -0,2013.T + 21,07 où T représente la valeur numérique, exprimée en °C, de la température du pic d'élution en fractionnement ATREF.

2. Fibre conforme à la revendication 1, dans laquelle l'interpolymère multibloc de propylène et d'alpha-oléfine est **caractérisé par** une recouvrance élastique Re pour une déformation de 300 % et 1 cycle, exprimée en pourcentage et mesurée sur un film de l'interpolymère multibloc de propylène et d'alpha-oléfine obtenu par moulage par compression, et par une masse volumique d, exprimée en grammes par centimètre-cube, qui vérifient l'inégalité suivante quand l'interpolymère multibloc de propylène et d'alpha-oléfine ne contient pratiquement pas de phase réticulée :

$$Re > 1481 - 1629(d).$$

3. Fibre conforme à la revendication 1, dans laquelle l'interpolymère multibloc de propylène et d'alpha-oléfine présente au moins un point de fusion $T_m$ et une masse volumique d dont les valeurs numériques, exprimées respectivement en degrés Celsius et en grammes par centimètre-cube, vérifient l'inégalité suivante :

$$T_m > -2002,9 + 4538,5(d) - 2422,2(d)^2\ ;$$

et l'interpolymère présente un indice $M_w/M_n$ valant de 1,7 à 3,5.

4. Fibre conforme à la revendication 1, dans laquelle l'interpolymère multibloc de propylène et d'alpha-oléfine présente un indice $M_w/M_n$ valant de 1,7 à 3,5, et se **caractérise par** une chaleur de fusion ΔH, exprimée en J/g, et une quantité ΔT, exprimée en degrés Celsius et définie comme étant la différence de température entre le plus grand pic observé en analyse AED et le plus grand pic observé en analyse CRYSTAF, qui vérifient les inégalités suivantes : pour

$$0 < \Delta H \leq 130\ J/g,\ \Delta T > -0,1299(\Delta H) + 62,81$$

et pour

$$\Delta H > 130\ J/g,\ \Delta T \geq 48\ °C,$$

étant entendu que le pic CRYSTAF est déterminé pour au moins 5 % de polymère en pourcentage cumulé, et que l'on prend la valeur de 30 °C pour la température du pic CRYSTAF si une fraction de moins de 5 % du polymère donne un pic CRYSTAF identifiable.

5. Fibre accessible à partir d'un interpolymère multibloc de propylène et d'alpha-oléfine ou comprenant un tel interpolymère, lequel est constitué de propylène pour au moins 50 % en moles de tout le polymère, dans laquelle fibre

l'interpolymère multibloc de propylène et d'alpha-oléfine est **caractérisé en ce qu'**il présente un indice de bloc moyen valant de 0,1 à 0,3 et un indice de distribution des masses moléculaires $M_W/M_n$ supérieur à 1,3.

**6.** Fibre accessible à partir d'au moins un interpolymère multibloc de propylène et d'alpha-oléfine en $C_2$ ou en $C_{4-20}$ ou comprenant au moins un tel interpolymère, lequel est constitué de propylène pour au moins 50 % en moles de tout le polymère, dans laquelle fibre l'interpolymère présente une masse volumique de 0,860 à 0,895 g/cm$^3$ et une déformation rémanente après compression, à 70 °C, inférieure à 70 %.

**7.** Fibre conforme à la revendication 1, 2, 3, 4 ou 5, dans laquelle l'alpha-oléfine est du styrène, de l'éthylène, du but-1-ène, de l''hex-1-ène, de l'oct-1-ène, du 4-méthyl-pent-1-ène, du déc-1-ène, ou une combinaison de ces composés.

**8.** Fibre conforme à la revendication 1, 2, 3, 4 ou 5, laquelle fibre est réticulée.

**9.** Fibre conforme à la revendication 1, 2, 3, 4 ou 5, dans laquelle l'interpolymère multibloc de propylène et d'alpha-oléfine est allié avec un autre polymère.

**10.** Fibre conforme à la revendication 1, 2, 3, 4 ou 5, laquelle fibre est une fibre bicomposante.

**11.** Fibre conforme à la revendication 8, sur laquelle la réticulation a été opérée par irradiation, avec des photons ou un faisceau d'électrons, ou à l'aide d'un agent de réticulation.

**12.** Fibre conforme à la revendication 8, dans laquelle le pourcentage de polymère réticulé, mesuré par le pourcentage pondéral de gel formé, vaut au moins 20 %.

**13.** Fibre conforme à la revendication 1, 2, 3, 4, 5 ou 6, laquelle fibre présente un coefficient de frottement inférieur à 1,2, et dans laquelle l'interpolymère n'est mélangé avec aucune charge.

**14.** Etoffe comprenant des fibres conformes à la revendication 1, 2, 3, 4, 5 ou 6.

**15.** Etoffe conforme à la revendication 14, laquelle étoffe comprend des fibres fabriquées par filage à partir d'une solution.

**16.** Etoffe conforme à la revendication 14, laquelle étoffe est élastique.

**17.** Etoffe conforme à la revendication 14, laquelle étoffe est tissée.

**18.** Etoffe conforme à la revendication 14, laquelle étoffe présente un taux de recouvrance dans la direction machine d'au moins 50 %, pour une déformation de 100 %.

**19.** Filé comprenant des fibres conformes à la revendication 1, 2, 3, 4, 5 ou 6.

**20.** Filé conforme à la revendication 19, lequel filé est couvert.

**21.** Filé conforme à la revendication 20, lequel filé est couvert par des filés de coton ou des filés de nylon.

**22.** Procédé de fabrication d'une fibre, comportant les étapes suivantes :

- faire fondre un interpolymère multibloc de propylène et d'alpha-oléfine, lequel interpolymère est constitué de propylène pour au moins 50 % en moles de tout le polymère,
- et extruder en une fibre cet interpolymère multibloc de propylène et d'alpha-oléfine,

dans lequel procédé l'interpolymère multibloc de propylène et d'alpha-oléfine est **caractérisé par** l'une ou plusieurs des propriétés suivantes :

a) il présente un indice $M_w/M_n$ valant de 1,7 à 3,5, et au moins un point de fusion $T_m$ et une masse volumique d dont les valeurs numériques, exprimées respectivement en degrés Celsius et en grammes par centimètre-cube, vérifient l'inégalité suivante :

$$T_m \geq 858{,}91 - 1825{,}3(d) + 1112{,}8(d)^2 \ ;$$

b) ou il présente un indice $M_w/M_n$ valant de 1,7 à 3,5, et se **caractérise par** une chaleur de fusion ΔH, exprimée en J/g, et une quantité ΔT, exprimée en degrés Celsius et définie comme étant la différence de température entre le plus grand pic observé en analyse AED et le plus grand pic observé en analyse CRYSTAF, dont les valeurs numériques vérifient les inégalités suivantes :
pour

$$0 < \Delta H \leq 130 \text{ J/g}, \ \Delta T > -0{,}1299(\Delta H) + 62{,}81$$

et pour

$$\Delta H > 130 \text{ J/g}, \ \Delta T \geq 48 \text{ °C},$$

étant entendu que le pic CRYSTAF est déterminé pour au moins 5 % de polymère en pourcentage cumulé, et que l'on prend la valeur de 30 °C pour la température du pic CRYSTAF si une fraction de moins de 5 % du polymère donne un pic CRYSTAF identifiable ;
c) ou il présente une recouvrance élastique Re pour une déformation de 300 % et 1 cycle, exprimée en pourcentage et mesurée sur un film de l'interpolymère de propylène et d'alpha-oléfine obtenu par moulage par compression, et une masse volumique d, exprimée en grammes par centimètre-cube, dont les valeurs numériques vérifient l'inégalité suivante quand l'interpolymère multibloc de propylène et d'alpha-oléfine ne contient pratiquement pas de phase réticulée :

$$Re > 1481 - 1629(d) \ ;$$

d) ou il présente, dans la fraction éluée entre 40 et 130 °C en fractionnement TREF, une teneur en comonomère qui est supérieure ou égale à la valeur de l'expression -0,2013.T + 21,07 où T représente la valeur numérique, exprimée en °C, de la température du pic d'élution en fractionnement ATREF.

**23.** Procédé conforme à la revendication 22, une étoffe constituée de telles fibres ne présentant pratiquement pas d'agglomérats de fibres en faisceaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US P6225243 A
- US 6140442 A
- US 5382400 A
- US 5336552 A
- US 5108820 A
- US 55390604 P
- US 66293705 P
- US 66293905 P
- US 605662938 A
- US 2005008916 W
- US 2005008915 W
- US 2005008917 W
- WO 0340195 A
- US 0204017 A
- US SN10429024 A
- WO 0424740 A
- US 20040010103 A
- US P6268444 B
- US 2003004286 A
- US 4762890 A
- US 4927888 A
- US 4950541 A
- US P4340563 A
- US 4663220 A
- US 4668566 A
- US 4322027 A
- US P4413110 A
- US P3485706 A
- US 4939016 A
- US 3860369 A
- US 6117801 A
- US P4381781 A
- US 08378498 P
- US P2957512 A
- US P512 A
- US P4801482 A
- US P5037416 A
- US 4981747 A, Morman
- US 4879170 A
- US 4940464 A
- US 3156242 A, Crowe, Jr.
- US 3881489 A, Hartwell
- US 3989867 A, Sisson
- US 5085654 A, Buell
- US 507230 A
- US 20050165193 A
- US 5226992 A
- US 5354597 A
- US 6113656 A
- US 5846654 A
- US 5840234 A
- US 086057 A
- US 20020132923 A1
- US 6803014 B
- US 6709742 B
- US P4190602 A
- DE 2337813
- US P6211302 A
- US 6284842 B
- US P5824718 A
- US P5525257 A
- US 5324576 A
- EP 0490854 B1
- US 3039895 A
- US 6652599 B
- US 20030024052 A
- US 3296063 A
- US 4999120 A
- US 933721 A
- US 20050142360 A


### Non-patent literature cited in the description


- **Markovich, Ronald P. ; Hazlitt, Lonnie G. ; Smith, Linley.** Development of gel-permeation chromatography-Fourier transform infrared spectroscopy for characterization of propylene-based polyolefin copolymers. *Polymeric Materials Science and Engineering,* 1991, vol. 65, 98-100
- **Deslauriers, P.J. ; Rohlfing, D.C. ; Shieh, E.T.** Quantifying short chain branching microstructures in propylene-1-olefin copolymers using size exclusion chromatography and Fourier transform infrared spectroscopy (SEC-FTIR). *Polymer,* 2002, vol. 43, 59-170
- **Kirk-Othmer.** The Encyclopedia of Chemical Technology. John Wiley & Sons, 1981, vol. 16, 416-417

- THE ENCYCLOPEDIA OF CHEMICAL TECNOLOGY. vol. 18, 191-192
- Modem Plastics Mid-October 1989 Encyclopedia Issue. 1989, vol. 66, 256-257
- **Seymour S. Schwartz ; Sidney H. Goodman.** Plastics Materials and Processes. Van Nostrand Reinhold Company, 527-563632-647596-602
- **W. Horspool ; D. Armesto.** Organic Photochemistry: A ComDrehensive Treatment. Ellis Horwood Limited, 1992
- **J. Kopecky.** Organic Photochemistry: A Visual Approach. VCH Publishers, Inc, 1992
- **N.J. Turro et al.** *Ace. Chem. Res.,* 1972, vol. 5, 92
- **J.T. Banks et al.** *J. Am. Chem. Soc,* 1993, vol. 115, 2473